(19)

Europäisches
Patentamt
European
Patent Office
Office européen
des brevets

(11) **EP 1 983 763 A2**

(12) **EUROPEAN PATENT APPLICATION**

(43) Date of publication:
**22.10.2008 Bulletin 2008/43**

(51) Int Cl.:
***H04N 9/31*** *(2006.01)*

(21) Application number: **08007541.9**

(22) Date of filing: **17.04.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **19.04.2007 JP 2007110962
09.11.2007 JP 2007292217**

(71) Applicant: **Sanyo Electric Co., Ltd.
Moriguchi-city
Osaka 531-0071 (JP)**

(72) Inventors:
  • **Maeda, Makoto
    Osaka 536-0017 (JP)**

  • **Mashitani, Ken
    Osaka 572-0839 (JP)**
  • **Arai, Kazuhiro
    Osaka 574-0077 (JP)**
  • **Kanayama, Hideyuki
    Kyoto 611-0011 (JP)**
  • **Ikeda, Takashi
    Osaka 578-0944 (JP)**
  • **Abe, Takaaki
    Osaka 536-0006 (JP)**

(74) Representative: **Glawe, Delfs, Moll
Patentanwälte
Postfach 26 01 62
80058 München (DE)**

(54) **Illumination device and projection video display device**

(57)     An illumination device includes a first light source unit having a plurality of first light sources, and a first reflection unit for guiding light beams emitted respectively from the first light sources in an identical direction. The illumination device further includes a second light source unit having at least one second light source. A center of an optical axis of the second light source is defined in an area where a light amount distribution of light beams to be emitted from the first light source unit and reflected on the first reflection unit is relatively small.

FIG.1

EP 1 983 763 A2

**Description**

*This application claims priority under 35 U.S.C. Section 119 of Japanese Patent Application No.* 2007-110962 filed April 19, 2007*, entitled "ILLUMINATION DEVICE AND PROJECTION VIDEO DISPLAY DEVICE", and Japanese Patent Application No.* 2007-292217 filed November 9, 2007*, entitled "ILLUMINATION DEVICE AND PROJECTION VIDEO DISPLAY DEVICE".*

BACKGROUND OF THE INVENTION

1. Field of the Invention

The present invention relates to an illumination device and a projection video display device, and more particularly to an illumination device having a plurality of light sources, and a projection video display device incorporated with the illumination device.

2. Disclosure of the Related Art

As a large-screen display device is spread in recent years, a technology of securing high luminance of illumination light is required in a projection video display device (hereinafter, called as a "projector"). As one approach for securing high luminance, there is proposed a multi-lamp arrangement in an illumination device. For instance, there is known a four-lamp illumination device incorporated with four lamps as an emission light source.

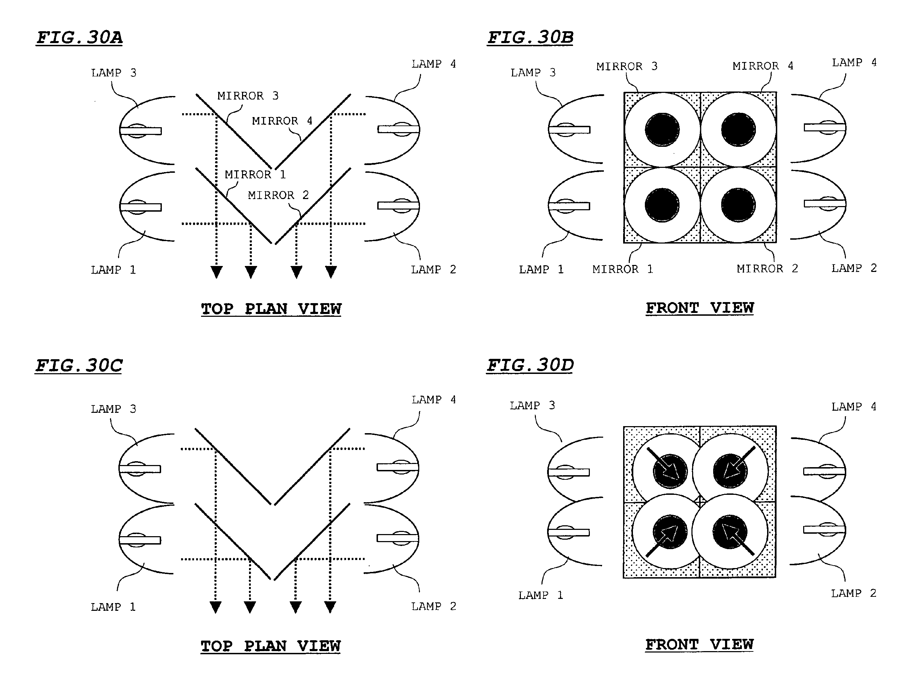

In the four-lamp illumination device, for instance, as shown in FIGS. 30A and 30B, in addition to four lamps 1, 2, 3 and 4, mirrors 1, 2, 3 and 4 for reflecting light beams from the respective lamps in an identical direction are arranged. Light beams emitted from the lamps 1 through 4 are respectively reflected on the mirrors 1 through 4, each of which is tilted by 45 degrees with respect to an optical axis of the corresponding lamp, and guided in a direction parallel to an optical axis of the illumination device. A hatched circle area shown in each mirror in FIG. 30B indicates a light amount distribution of light beams reflected on the corresponding mirror in two stages for simplifying the description. The area with a larger hatching density indicates that the area has a larger light amount.

In the above arrangement, as shown in FIG. 30A and 30B, it is necessary to arrange the lamps and the mirrors at such a position as not to cause mutual physical light loss between the lamps on a plane perpendicular to the optical axis of the illumination system i.e. a plane parallel to the plane in FIG. 30B to provide an illumination device, in which light beams with a possible largest light amount are emitted from the lamps. On the other hand, considering the amount of light beams to be incident onto a projection lens, it is preferable to project illumination light with a lower dispersion angle. In view of the above, as shown in FIGS. 30C and 30D, it is preferable to direct the light beams from the lamps in a direction closer to the optical axis direction of the illumination device so as to increase the light amount of the vicinity area of the optical axis of the illumination device.

If, however, the light beams from the lamps are directed in a direction closer to the optical axis direction of the illumination device, a part of the light beams from the lamps, which is not reflected on the corresponding mirror, may be increased, thereby causing a drawback that the light use efficiency may be lowered.

The light amount of illumination light can be increased by increasing the number of lamps i. e. by providing a multi-lamp arrangement. However, as the multi-lamp arrangement is provided by simply arranging a multitude of lamps, the area (illumination area) of light beams to be emitted from the illumination device may be increased, as the number of lamps is increased. As a result, the light use efficiency may be lowered according to Etendue theory as follows.

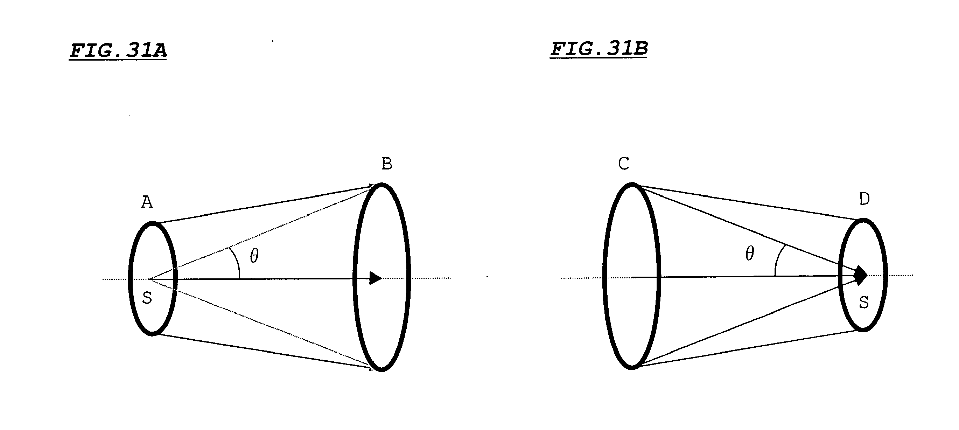

A value obtained by Etendue theory i.e. an Etendue value is obtained by a product of a spread angle i.e. a stereoscopic angle of light flux, and an effective light flux area. Referring to FIG. 31A, in the case where light propagates from the point A to the point B, assuming that the effective light flux area at the point A is S, and the spread angle of light at the point A is θ, the Etendue value (E) is calculated by the following expression (1).

$$E = 2\pi S \ (1 - \cos \theta) \qquad \qquad \ldots \ (1)$$

where $2\pi(1 - \cos \theta)$ in the expression (1) is a stereoscopic angle of light flux. The Etendue value (E) is calculated in the similar manner as described above, in the case where light is converged as shown in FIG. 30B.

In an ideal optical system, the Etendue value is retained. However, in an actual optical system, as light propagates, the Etendue value is increased. In a projector incorporated with a liquid crystal panel, if the Etendue value of an illumination device is smaller than the Etendue value of a panel surface, it is possible to guide all the light beams from the illumination device to the panel surface. However, if the Etendue value of the illumination device is larger than the Etendue value of the panel surface, the light use efficiency of the illumination device is decreased.

In the case where the area of the panel surface, and the light incident angle are fixed, if the area of light flux in the illumination device is increased, the Etendue value of the illumination device is increased, as the light flux area is increased. As a result, the light use efficiency i.e. the light incident amount on the panel surface is decreased. In other words, the above arrangement may make it difficult or impossible for light beams to be incident onto the liquid crystal panel with a dispersion angle larger than the effective dispersion angle with respect to the liquid crystal panel.

As described above, as the light flux area in the illumination device is increased, the light use efficiency of the panel surface may be lowered. Accordingly, even if the multi-lamp arrangement is actively adopted to increase the light amount of illumination light, an increased light amount of illumination light may increase the light flux area. An increased light flux area in the illumination device may obstruct effective incidence of illumination light having an increased light amount onto the panel. As a result, an increase in the luminance of a projection image may not be advantageously obtained.

There rises another drawback in addition to the above drawback on the light use efficiency. Specifically, the contrast of a projection image may be lowered, because a convergence angle of illumination light at the time of light incidence onto the panel is increased, as the area of illumination light flux is increased. In view of the above drawbacks, it is necessary to provide a certain constraint on increasing the area of illumination light flux.

SUMMARY OF THE INVENTION

A primary object of the invention is to secure high luminance by a multi-lamp arrangement, while keeping high light use efficiency.

An illumination device according to a first aspect of the invention comprises a first light source unit including a plurality of first light sources, a first reflection unit for guiding light beams emitted respectively from the first light sources in an identical direction, and a second light source unit including at least one second light source. Assuming a plane perpendicular to a propagating direction of the light beams emitted from the first light source unit and reflected on the first reflection unit, a center of an optical axis of the second light source is defined in an area surrounded by centers of optical axes of the first light sources, on the plane. The area is an area where a light amount distribution of the light beams from the first light sources is relatively small. In the above arrangement, by defining the optical axis center of the second light source in the area to compensate for the light amount, the light amount of illumination light can be increased while suppressing an increase in the area of illumination light flux.

An illumination device according to a second aspect of the invention comprises four first light sources, a reflection unit including four mirror surfaces for guiding light beams emitted respectively from the four first light sources in an identical direction, and a second light source. Each of the four mirror surfaces is arranged at such a position that a center of an optical axis of the corresponding first light source is aligned with a position of a vertex of a predetermined rectangle, assuming that the rectangle is defined on a plane perpendicular to a propagating direction of the light beams emitted from the first light sources and reflected on the respective corresponding mirror surfaces. A center of an optical axis of the second light source is aligned with a center position of the rectangle. The center position of the rectangle has a relatively small light amount distribution of the light beams from the first light sources. In the above arrangement, by aligning the optical axis center of the second light source with the center position of the rectangle to compensate for the light amount, the light amount of illumination light can be increased while suppressing an increase in the area of illumination light flux.

A projection video display device according to a third aspect of the invention comprises an illumination device for emitting light beams, and a light modulation unit for modulating the light beams in accordance with an input video signal to generate modulated image light beams. The illumination device includes a first light source unit having a plurality of first light sources, a first reflection unit for guiding light beams emitted respectively from the first light sources in an identical direction, and a second light source unit having at least one second light source. Assuming a plane perpendicular to a propagating direction of the light beams emitted from the first light source unit and reflected on the first reflection unit, a center of an optical axis of the second light source is defined in an area, on the plane, where a light amount distribution of the light beams from the first light sources is relatively small. The area is surrounded by centers of optical axes of the first light sources. Similarly to the illumination device according to the first aspect, the illumination device according to the third aspect enables to increase the light amount of illumination light while suppressing an increase in the area of illumination light flux. Thus, the projection video display device according to the third aspect enables to effectively secure high luminance for a projection image.

BRIEF DESCRIPTION OF THE DRAWINGS

The foregoing and other objectives and novel features of the present invention will be more fully understood by reading description of a preferred embodiment in combination with the attached drawings as follows:

FIG. 1 is a diagram showing an arrangement of an optical system of a projector in accordance with a first embodiment of the invention.

FIGS. 2A and 2B are diagrams showing an arrangement of an illumination device in the first embodiment.

FIGS. 3A through 3D are diagrams showing a mirror arrangement and modifications thereof in the first embodiment.

FIGS. 4A through 4E are diagrams for describing light emission control operations to be performed by the illumination device in the first embodiment.

FIGS. 5A and 5B are diagrams showing a modification of the illumination device i.e. a hybrid illumination system in the first embodiment.

FIGS. 6A and 6B are diagrams showing a modification of the illumination device i.e. a modification of lamp output in the first embodiment.

FIGS. 7A and 7B are diagrams showing a modification of the illumination device i.e. a modification of lamp output in the first embodiment.

FIGS. 8A and 8B are diagrams showing an arrangement of an illumination device in accordance with a second embodiment of the invention.

FIGS. 9A and 9B are diagrams showing another arrangement of the illumination device in the second embodiment.

FIGS. 10A and 10B are diagrams showing an arrangement of an illumination device in accordance with a third embodiment of the invention.

FIGS. 11A and 11B are diagrams showing another arrangement of the illumination device in the third embodiment.

FIGS. 12A and 12B are diagrams showing an arrangement of an illumination device in accordance with a fourth embodiment of the invention.

FIGS. 13A and 13B are diagrams showing an arrangement of an illumination device in accordance with a fifth embodiment of the invention.

FIGS. 14A and 14B are diagrams showing an arrangement of an illumination device in accordance with a sixth embodiment of the invention.

FIGS. 15A and 15B are diagrams showing an arrangement of an illumination device in accordance with a seventh embodiment of the invention.

FIGS. 16A and 16B are diagrams showing an arrangement of an illumination device in accordance with an eighth embodiment of the invention.

FIGS. 17A and 17B are diagrams showing another arrangement of the illumination device in the eighth embodiment.

FIG. 18 is a diagram showing a characteristic of a lamp to be used in a ninth embodiment of the invention.

FIG. 19 is a diagram showing an arrangement of a projector in Configuration Example 1 in the ninth embodiment.

FIG. 20 is a diagram for describing a color reproducible area of the projector in Configuration Example 1.

FIGS. 21A and 21B are diagrams for describing an operation of a Ye light valve to be used in Configuration Example 1.

FIG. 22 is a diagram showing an arrangement of a projector in Configuration Example 2 in the ninth embodiment.

FIG. 23A and 23B are diagrams showing an arrangement of a modulation area of a Ye light valve to be used in Configuration Example 2.

FIG. 24 is a diagram showing an arrangement of a projector in Configuration Example 3 in the ninth embodiment.

FIG. 25 is a diagram showing a transmittance characteristic of a dichroic mirror to be used in Configuration Example 3.

FIGS. 26A and 26B are diagrams for describing a color reproducible area of the projector in Configuration Example 3.

FIG. 27 is a diagram showing a modification of the projector in Configuration Example 3.

FIG. 28 is a diagram showing an arrangement of a projector in Configuration Example 4 in the ninth embodiment.

FIG. 29 is a diagram for describing an effect of the projector in Configuration Example 4.

FIGS. 30A through 30D are diagrams for describing a drawback to be solved in a four-lamp illumination device.

FIGS. 31A and 31B are diagrams for describing Etendue theory.

The drawings are provided mainly for describing the present invention, and do not limit the scope of the present invention.

## DESCRIPTION OF THE PREFERRED EMBODIMENTS

In the following, embodiments of the invention are described referring to the drawings.

(Arrangement of Five-lamp Arrangement)

<First Embodiment>

The first embodiment is directed to a projector as an example of an illumination device embodying the invention.

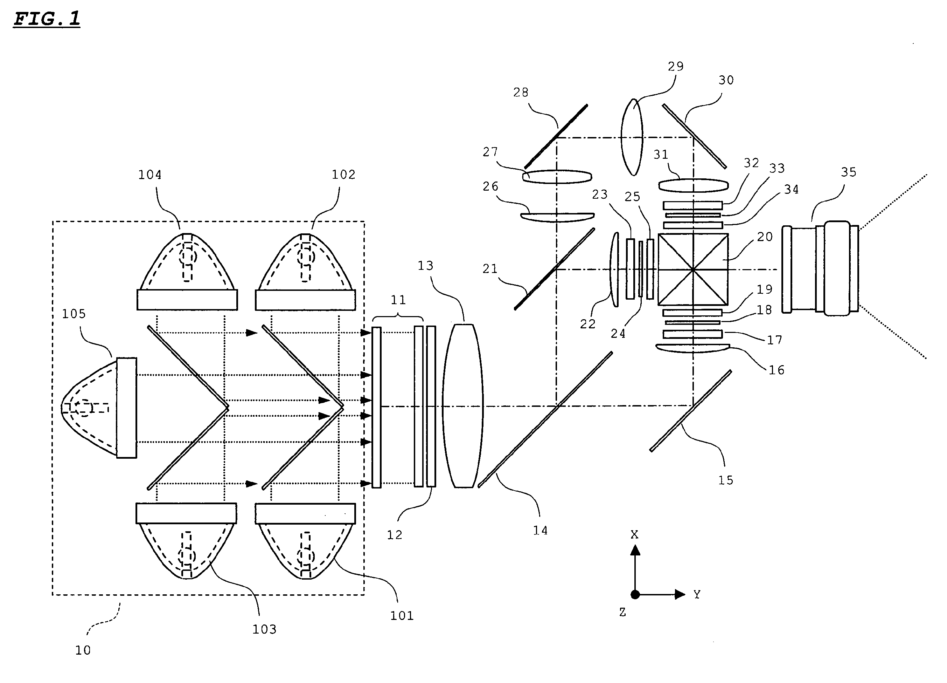

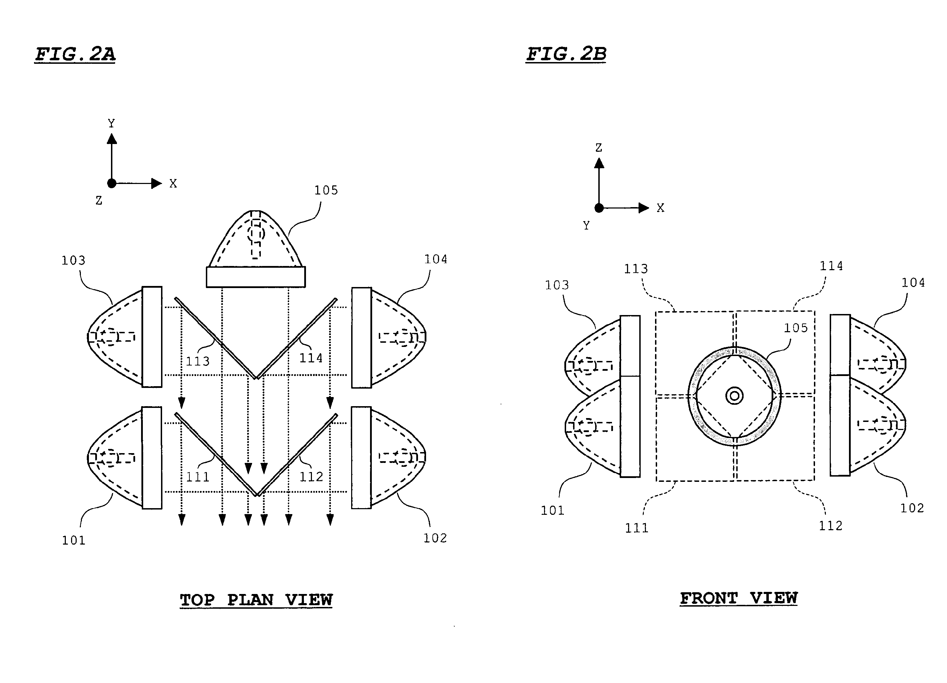

FIG. 1 shows an optical system of a projector in accordance with the first embodiment. Referring to FIG. 1, the reference numeral 10 indicates an illumination device having five lamps 101, 102, 103, 104, and 105. The lamp 101, 102, 103, 104, 105 is constituted of an ultra-high pressure mercury lamp, a metal halide lamp, a xenon lamp, or a like lamp. Light beams from the lamp 101, 102, 103, 104, 105 are emitted as substantially parallel beams by a function of a reflector. The arrangement of the illumination device 10 is described later referring to FIGS. 2A and 2B.

Light beams from the illumination device 10 are incident onto a PBS (polarized beam splitter) array 12 and a condenser lens 13 via an integrator 11. The integrator 11 includes a first integrator lens and a second integrator lens having fly-eye lenses, and imparts a lens function to the light beams to be incident from the illumination device 10 in such a manner that the light amount distribution of light beams to be incident onto liquid crystal panels 18, 24, and 33 is substantially made uniform. The PBS array 12 is formed by arranging a plurality of polarized beam splitters and half-wavelength plates in an array pattern, and is adapted to align polarization directions of light beams incident from the integrator 11 in an identical direction. The condenser lens 13 imparts a condensing function to light beams incident from the PBS array 12. Light beams transmitted through the condenser lens 13 are incident onto a dichroic mirror 14.

The dichroic mirror 14 transmits solely light beams (hereinafter, called as "R beams") having a wavelength band corresponding to red, and reflects light beams (hereinafter, called as "B beams") having a wavelength band corresponding to blue, and light beams (hereinafter, called as "G beams") having a wavelength band corresponding to green, among the light beams incident from the condenser lens 13. The R beams transmitted through the dichroic mirror 14 are reflected on a mirror 15, and then incident onto a condenser lens 16.

The condenser lens 16 imparts a lens function to the R beams in such a manner that the R beams are incident onto the liquid crystal panel 18 as substantially parallel beams. The R beams transmitted through the condenser lens 16 are incident onto the liquid crystal panel 18 via an incident-side polarizer 17. The liquid crystal panel 18 is driven in accordance with a video signal for red color, and modulates the R beams depending on a driving condition of the liquid crystal panel 18. The R beams modulated by the liquid crystal panel 18 are incident onto a dichroic prism 20 via an output-side polarizer 19.

G beams among the light beams reflected on the dichroic mirror 14 are reflected on a dichroic mirror 21, and then incident onto a condenser lens 22. The condenser lens 22 imparts a lens function to the G beams in such a manner that the G beams are incident onto the liquid crystal panel 24 as substantially parallel beams. The G beams transmitted through the condenser lens 22 are incident onto the liquid crystal panel 24 via an incident-side polarizer 23. The liquid crystal panel 24 is driven in accordance with a video signal for green color, and modulates the G beams depending on a driving condition of the liquid crystal panel 24. The G beams modulated by the liquid crystal panel 24 are incident onto the dichroic prism 20 via an output-side polarizer 25.

B beams transmitted through the dichroic mirror 21 are incident onto a condenser lens 26. The condenser lens 26 imparts a lens function to the B beams in such a manner that the B beams are incident onto the liquid crystal panel 33 as substantially parallel beams. The B beams transmitted through the condenser lens 26 propagate along an optical path defined by relay lenses 27, 29, and 31, and two mirrors 28 and 30 for optical path length adjustment, and then incident onto the liquid crystal panel 33 via an incident-side polarizer 32. The liquid crystal panel 33 is driven in accordance with a video signal for blue color, and modulates the B beams depending on a driving condition of the liquid crystal panel 33. The B beams modulated by the liquid crystal panel 33 are incident onto the dichroic prism 20 via an output-side polarizer 34.

The dichroic prism 20 combines the light beams modulated by the liquid crystal panels 18, 24, and 33 for incidence onto a projection lens 35. Light beams (hereinafter, called as "modulated image light beams") obtained by combination by the dichroic prism 20 are enlarged and projected on the projection screen by the projection lens 35.

In the following, an arrangement of the illumination device 10 is described referring to FIGS. 2A and 2B. FIGS. 2A and 2B are respectively a top plan view and a front view of the illumination device 10. In FIG. 2B, mirrors 111, 112, 113, and 114 are illustrated by broken-lines to see through the lamp 105.

As shown in FIGS. 2A and 2B, the illumination device 10 includes the five lamps 101 through 105, and the four mirrors 111 through 114. Among the constituent elements, the lamps 101 through 104 are arranged at such a position that the light emission directions thereof are aligned in X-axis direction in FIGS. 2A and 2B. The arranged positions of the lamps 101 and 102, and the lamps 103 and 104 are displaced from each other by a certain distance in Z-axis direction in FIGS. 2A and 2B.

Light beams emitted from the lamps 101 through 104 are reflected in an identical direction i.e. Y-axis direction by the mirrors 111 through 114, respectively. The mirror 111, 112, 113, 114 has a pentagonal shape obtained by cutting away one vertex portion of a rectangle. As shown in FIG. 2B, the mirror 111, 112, 113, 114 is arranged at such a position that a vertex of the cutaway portion thereof is aligned with the center of the optical axis of the illumination device 10. The lamp 105 is arranged at such a position that light beams emitted therefrom are transmitted through the cutaway portions of the mirrors 111 through 114. The light emission direction of the lamp 105 is aligned in a direction i.e. Y-axis direction perpendicular to the light emission direction of the lamps 101 through 104.

The optical axis of the lamp 101, 102, 103, 104 is bent by 90° by the mirror 111, 112, 113, 114, respectively. The bent optical axis (hereinafter, called as "illumination optical axis") of the lamp 101, 102, 103, 104 is aligned with e.g. a position of a vertex of a rectangle. The lamp 105 is arranged at such a position that the optical axis of the lamp 105 is aligned with the center of the rectangle i.e. the optical axis center of the illumination device 10.

As the illumination optical axis of the lamp 101, 102, 103, 104 approaches the optical axis center of the illumination device 10, the light amount of the vicinity area of the optical axis center is increased, and the incident light amount with respect to the projection lens 35 is increased. Despite the advantage, however, as the illumination optical axis of the lamp 101, 102, 103, 104 approaches the optical axis center of the illumination device 10, the light amount of light beams incident onto the cutaway portion of the mirror 111, 112, 113, 114 among the light beams from the lamp 101, 102, 103, 104 is increased, and the light use efficiency of the lamp 101, 102, 103, 104 is decreased. In other words, there is a trade-off relation between the incident light amount with respect to the projection lens 35, and the light use efficiency of the lamp 101, 102, 103, 104, in the case where the illumination optical axis of the lamp 101, 102, 103, 104 approaches the optical axis center of the illumination device 10. In view of the above, the lamps 101 through 104, and the mirrors 111 through 114 are arranged at respective optimum positions thereof, considering the trade-off relation.

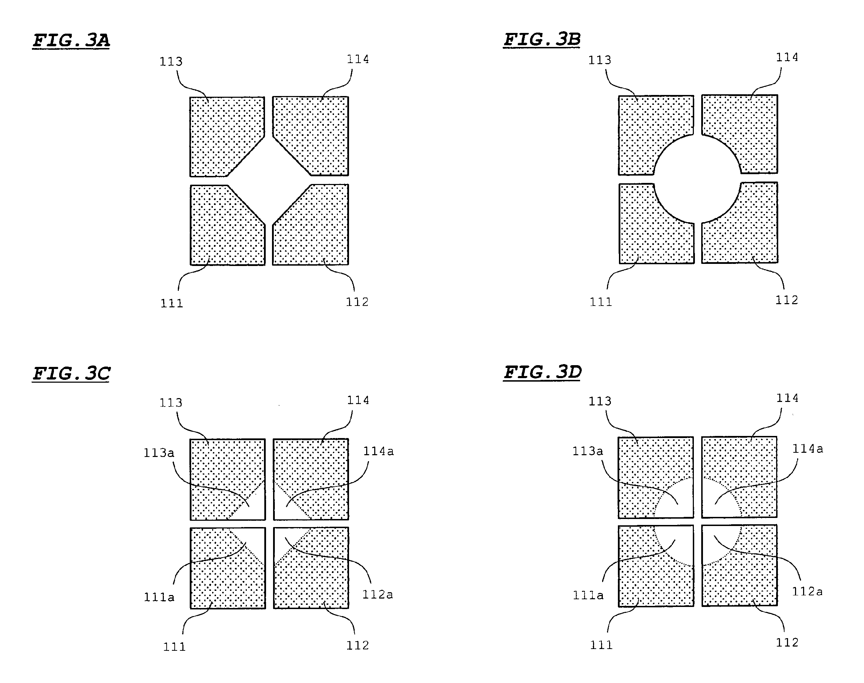

FIGS. 3A through 3D are diagrams for describing modifications on the arrangement of the mirrors 111 through 114, including the aforementioned arrangement of the mirrors 111 through 114 shown in FIG. 3A. In FIG. 3A, for simplifying the description, a clearance is defined between the mirrors. Actually, however, the mirrors are arranged substantially without a clearance. The same idea is also applied to the arrangements shown in FIGS. 3B through 3D.

In the modification shown in FIG. 3B, a cutaway portion of the mirror 111, 112, 113, 114 has an arc shape. In the modification, light beams from the lamp 105 are less likely to be blocked by the mirrors 111 through 114. Accordingly, the light use efficiency of the lamp 105 can be enhanced.

In the modification shown in FIG. 3C, the mirror 111, 112, 113, 114 has a light transmissive portion 111a, 112a, 113a, 114a, respectively, in place of a cutaway portion. In the modification, the mirror 111, 112, 113, 114 has a rectangular shape, with a portion corresponding to the cutaway portion in FIG. 3A serving as the light transmissive portion 111a, 112a, 113a, 114a devoid of a mirror surface.

In the modification shown in FIG. 3D, the light transmissive portion 111a, 112a, 113a, 114a has a fan-like shape. Similarly to the arrangement shown in FIG. 3B, the modification enables to enhance the light use efficiency of the lamp 105.

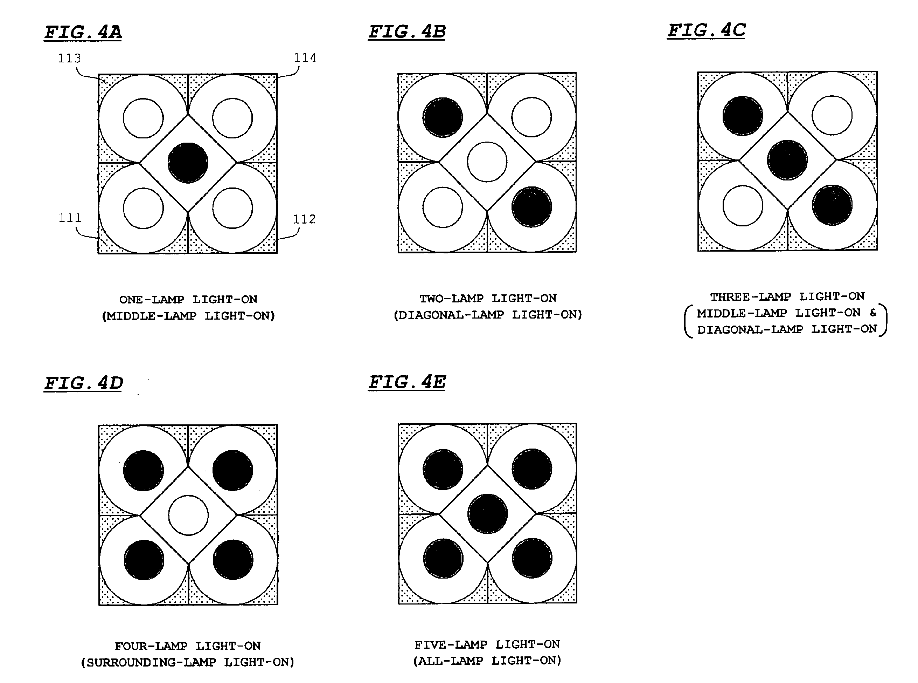

In the following, light emission control operations to be performed by the illumination device 10 are described referring to FIGS. 4A through 4E.

FIGS. 4A through 4E are diagrams showing the mirrors 111 through 114 viewed from the front side of the illumination device 10. For simplifying the description, two kinds of circular areas are defined on a mirror area of the mirror 111, 112, 113, 114, wherein the outer circular area has a smaller light intensity with respect to reflection light from the mirror 111, 112, 113, 114, and the inner circular area has a larger light intensity with respect to reflection light from the mirror 111, 112, 113, 114. Also, a rectangular area and a circular area are defined on a middle area corresponding to the cutaway portions of the mirrors 111 through 114, wherein the outer area has a smaller light intensity with respect to light from the lamp 105, and the inner area has a larger light intensity with respect to light from the lamp 105. An area with a larger hatching density among the areas indicates that the area has a larger light amount when emission of the corresponding lamp is turned on. When emission of the corresponding lamp is turned off, the area is indicated as a white area without a hatching density.

As compared with the case where all the five lamps 101 through 105 are turned on (see FIG. 4E), if any one of the lamps except for the middle lamp is turned off, the light amount distribution on the liquid crystal panels 18, 24, and 33 may be made non-uniform. Accordingly, in performing light emission control except for all-lamp light-on control, any one of the light emission control patterns shown in FIGS. 4A through 4D is performed, instead of turning off one of the lamps except for the middle lamp.

In the case where the projector is used in a full-time light-on condition, for instance, only the middle lamp 105 is turned on in a standby mode when the user does not gaze at a projection image (see FIG. 4A) . In a normal use condition, the lamps 111 through 115 are selectively turned on in either one of diagonal 2-lamp light-on condition (see FIG. 4B), diagonal 3-lamp light-on condition (see FIG. 4C), surrounding 4-lamp light-on condition (see FIG. 4D), and all-lamp light-on condition (see FIG. 4E). In the above arrangement, alternately switching over e.g. between middle-lamp light-on condition and diagonal 2-lamp light-on condition in the standby mode and the normal use mode enables to avoid likelihood that one lamp is continuously turned on throughout the modes, thereby enabling to extend the life of the illumination device 10.

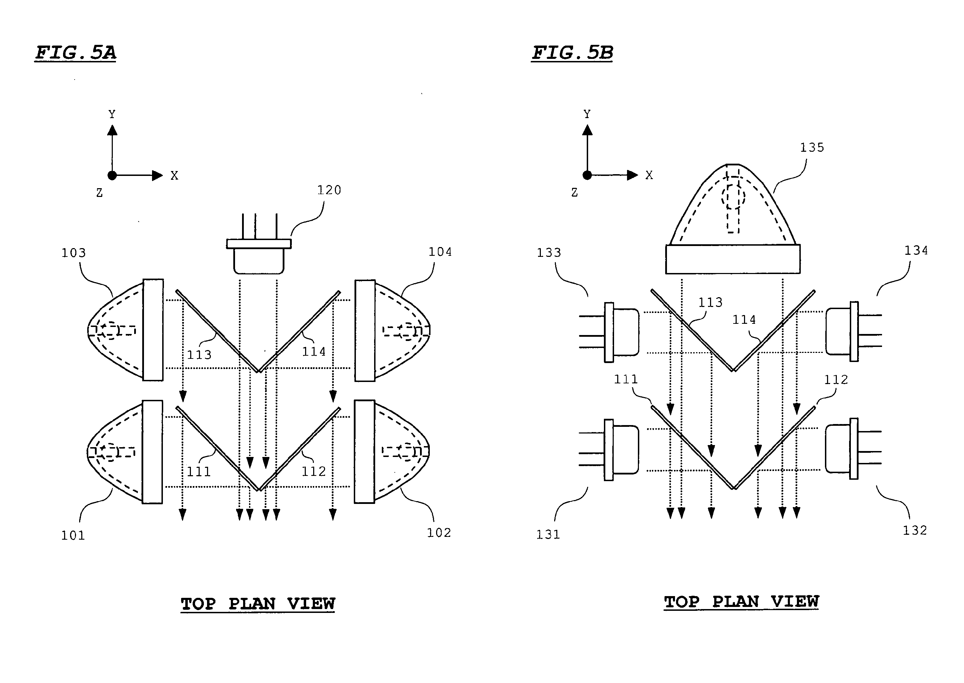

Alternatively, the illumination device 10 in the first embodiment may be modified into a hybrid illumination system. FIG. 5A is a top plan view showing a modification, in which the lamp 105 is replaced by a solid-state light source such as a laser light source. The mirrors 111 through 114 may have any one of the arrangements shown in FIGS. 3A through 3D.

In the modification shown in FIG. 5A, illumination light having an enhanced color purity can be obtained by replacing the lamp 105 with a solid-state light source 120. For instance, in the case where the spectrum of light to be emitted from the lamp 101, 102, 103, 104 is shifted to a short wavelength side, the color purity of red in illumination light can be enhanced by arranging the solid-state light source 120 for emitting light beams having a wavelength band corresponding to red.

In the hybrid illumination system, as shown in FIG. 5B, the lamp 101, 102, 103, 104 may be replaced by a solid-state light source 131, 132, 133, 134, respectively. In the modification, the light amount of light beams from the solid-state light sources 131 through 134 can be compensated for by the light amount of light beams from a lamp 135, thereby enabling to obtain illumination light having a large light amount.

In the modifications shown in FIGS. 5A and 5B, there is no need of providing a single solid-state light source. Two or more solid-state light sources may be combined according to needs to secure a sufficient light amount or the like.

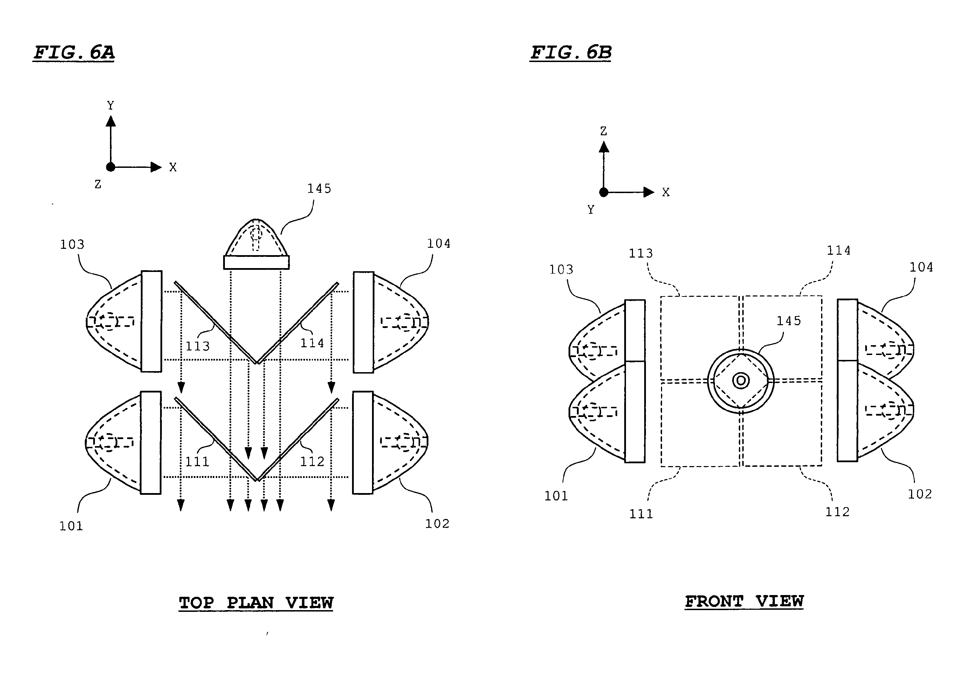

FIGS. 6A and 6B are diagrams showing a modification, in the case where the lamp output is changed. In the modification, the middle lamp 105 is replaced by a low-output lamp 145. The modification enables to reduce the beam diameter of light to be emitted from the lamp 145, which is advantageous in enhancing the light use efficiency of the light beams from the lamps 101 through 104 by the reduced beam diameter.

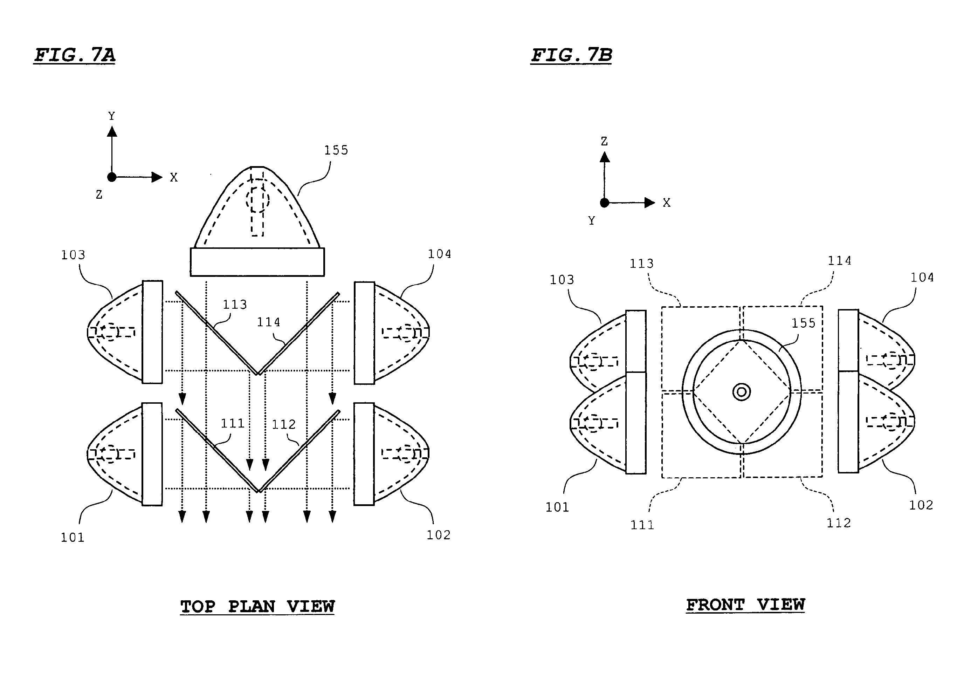

Alternatively, as shown in FIGS. 7A and 7B, the middle lamp 105 may be replaced by a high-output lamp 155. The modification enables to increase the light amount of the vicinity area of the optical axis center of the illumination device 10. Thereby, the incident light amount with respect to the projection lens 35 can be increased.

As described above, according to the first embodiment, the center of the optical axis of the lamp 105 is defined in an area where the light amount distribution is relatively small on a plane (X-Z plane in FIGS. 2A and 2B) perpendicular to the light propagating direction of light beams to be emitted from the lamp 101, 102, 103, 104 and reflected on the mirror 111, 112, 113, 114. This arrangement enables to increase the light amount by addition of the lamp 105, while suppressing an increase in the area of illumination light flux. Accordingly, the projector shown in FIG. 1 is advantageous in increasing the light amount of light beams from the illumination device 10 while securing the light incidence efficiency with respect to the liquid crystal panels 18, 24, and 33, thereby enabling to effectively secure high luminance for a projection image.

In the first embodiment, light beams from the lamp 105 are guided to a center position of illumination light flux, where a sufficient light amount has not been secured by a four-lamp arrangement constituted of the lamps 101 through 104. The first embodiment is advantageous in effectively increasing the light amount of a central portion of illumination light flux. Accordingly, illumination light can be projected with a lower dispersion angle, and the incident light amount with respect to the projection lens 35 can be increased. Thus, high luminance for a projection image can be effectively obtained.

In the first embodiment, the area of illumination light flux is substantially the same as in the four-lamp arrangement constituted of the lamps 101 through 104. Accordingly, there is no likelihood that the convergence angle of light beams to be incident onto the liquid crystal panel 18, 24, 33 may be unduly increased. Thus, as compared with the four-lamp arrangement constituted of the lamps 101 through 104, there is no likelihood that the contrast of a projection image may be degraded.

As described above, the first embodiment is advantageous in effectively securing high luminance for a projection image by addition of a lamp, while keeping the light use efficiency, and simultaneously suppressing lowering of the contrast in a projection image.

<Second Embodiment>

In the first embodiment, the lamps 101 through 105 are arranged at such a position that the optical axis of the lamp 105 perpendicularly intersects with the optical axes of the lamps 101 through 104. In the case where the optical axes of the lamps are not aligned in parallel to each other as described above, the arrangement pattern of the illumination device 10 may be limited, and at the same time, there arises a drawback that the usage pattern of the projector may be limited.

For instance, in the arrangement of the first embodiment, if the illumination device 10 is arranged at such a position that X-Z plane in FIGS. 2A and 2B is aligned in parallel to the ground, the lamp 105 is directed in a vertical direction with respect to the ground. As a result, the life of the lamp 105 may be significantly shortened. In view of the likelihood, in the arrangement of the first embodiment, it is impossible to arrange the illumination device 10 in the aforementioned manner, and accordingly, the usage pattern of the projector may be limited.

In the second embodiment, lamps 101 through 105 are arranged at such a position that the optical axes thereof are aligned in parallel to each other to solve the above drawback.

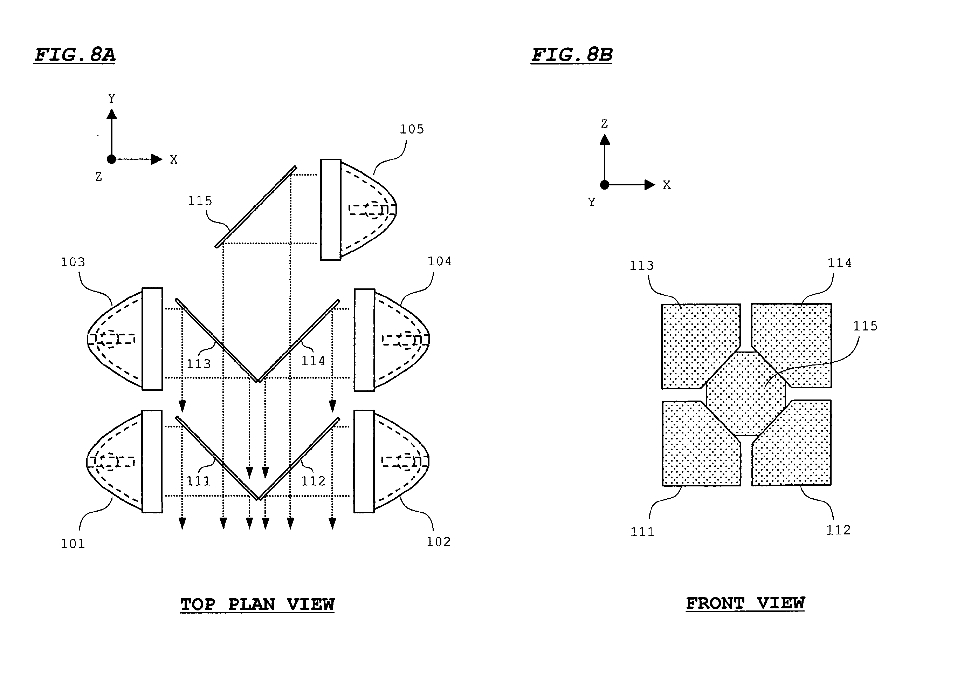

FIGS. 8A and 8B are diagrams showing an arrangement of an illumination device 10 in accordance with the second embodiment. In FIG. 8B, for simplifying the description, merely the arrangement of mirrors 111 through 115 is illustrated, and the lamps 101 through 105 are not illustrated.

As shown in FIGS. 8A and 8B, all of the lamps 101 through 105 are arranged at such a position that the light emission directions thereof are aligned in X-axis direction in FIGS. 8A and 8B. Similarly to the first embodiment, the arranged positions of the lamps 101 and 102, and the lamps 103 and 104 are displaced from each other by a certain distance in Z-axis direction in FIGS. 8A and 8B.

Light beams emitted from the lamps 101 through 105 are reflected in an identical direction i.e. Y-axis direction by the mirrors 111 through 115, respectively. Similarly to the first embodiment, the mirror 111, 112, 113, 114 has a pentagonal shape obtained by cutting away one vertex portion of a rectangle. As shown in FIG. 8B, the mirror 111, 112, 113, 114 is arranged at such a position that a vertex of the cutaway portion thereof is aligned with the center of the optical axis of the illumination device 10. The mirror 115 is arranged at such a position that light beams from the lamp 105 are reflected on the mirror 115 for transmitting through the cutaway portions of the mirrors 111 through 114.

The optical axis of the lamp 101, 102, 103, 104 is bent by 90° by the mirror 111, 112, 113, 114, respectively. Similarly to the first embodiment, the bent optical axis of the lamp 101, 102, 103, 104 is aligned with e.g. a position of a vertex of a rectangle. The mirror 115 is arranged at such a position that the optical axis of the lamp 105 is aligned with the center of the rectangle i.e. the optical axis center of the illumination device 10.

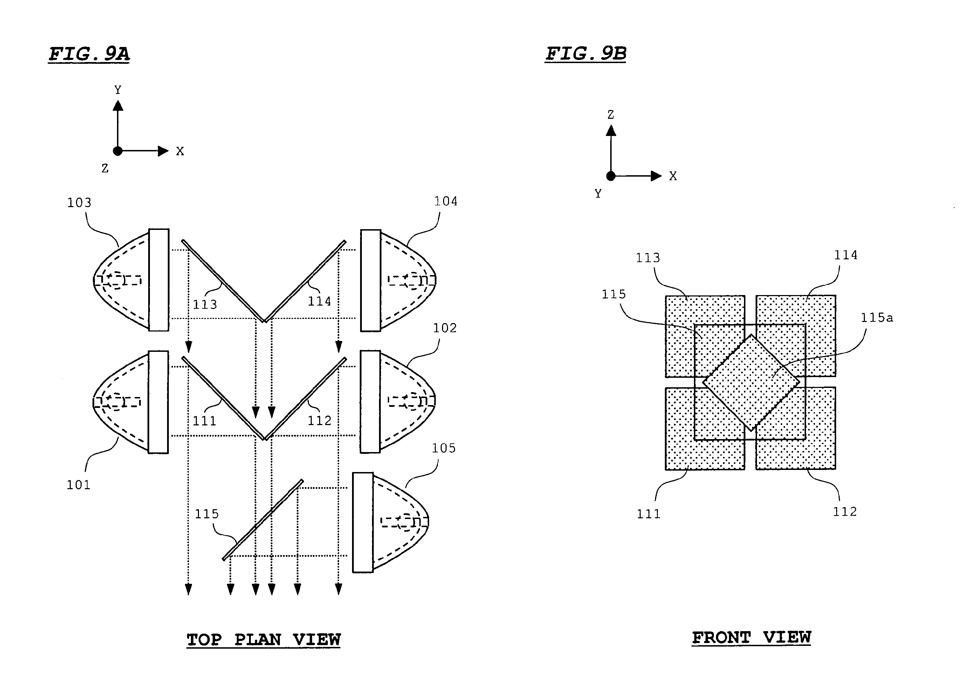

FIGS. 9A and 9B are diagrams showing a modification of the illumination device 10 of the second embodiment. Similarly to FIG. 8B, in FIG. 9B, for simplifying the description, merely the arrangement of the mirrors 111 through 115 is illustrated, and the lamps 101 through 105 are not illustrated.

Unlike the arrangement shown in FIGS. 8A and 8B, in the modification shown in FIGS. 9A and 9B, the lamp 105 and the mirror 115 are arranged anterior to the lamps 101 through 104 and the mirrors 111. through 114. In the modification, the mirrors 111 through 114 are not necessarily required to have a pentagonal shape as shown in FIGS. 8A and 8B, but may have a rectangular shape. In the modification, light beams in the vicinity area of the optical axis center of the illumination device 10, among the light beams reflected on the mirrors 101 through 104, are blocked by a mirror portion 115a of the mirror 115. Light beams from the lamp 105 are reflected on the mirror portion 115a and guided to the vicinity area of the optical axis center of the illumination device 10. The mirror portion 115a is formed in the middle of the mirror 115, and an outer portion of the mirror 115 other than the mirror portion 115a is transparent.

In the second embodiment, the lamps 101 through 105 are arranged at such a position that the optical axes thereof are aligned in parallel to each other. Accordingly, even if the illumination device 10 is arranged at such a position that X-Z plane (see FIGS. 8A and 8B, or FIGS. 9A and 9B) is aligned in parallel to the ground, there is no likelihood that any one of the lamps 101 through 105 may be directed in a vertical direction with respect to the ground. Thus, as compared with the arrangement in the first embodiment, the second embodiment is advantageous in increasing the number of arrangement patterns of the illumination device 10, thereby providing flexible use of the projector.

<Third Embodiment>

In the first and the second embodiments, the lamps 101 and 103 are arranged to have the light emission directions opposite to those of the lamps 102 and 104. In the third embodiment, lamps 101 through 104 are arranged at such a position that the light emission directions thereof are identical to each other.

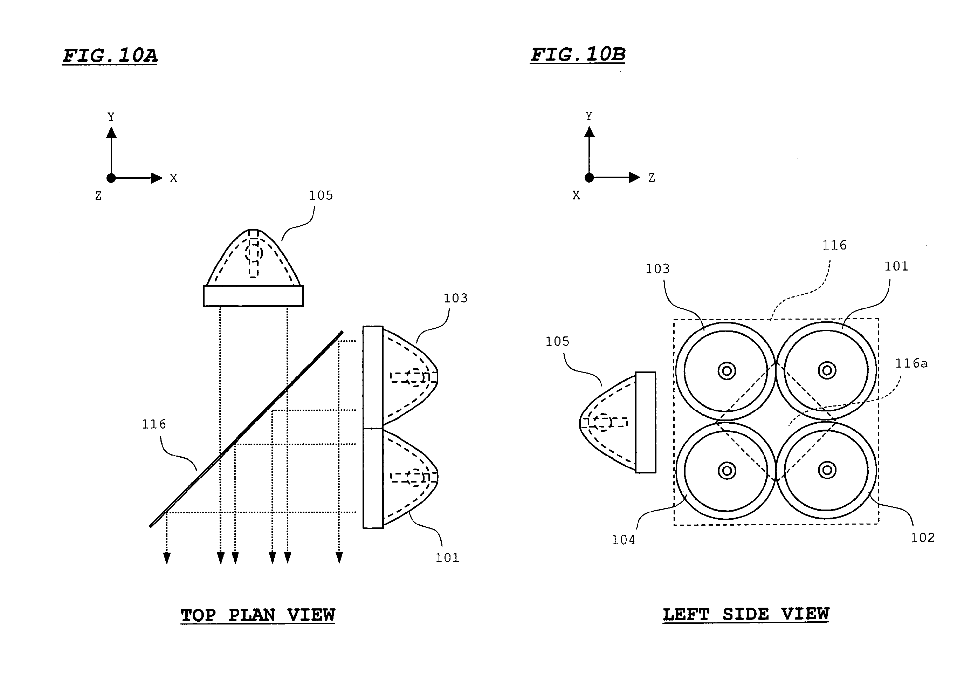

FIGS. 10A and 10B are diagrams showing an arrangement of an illumination device 10 in accordance with the third embodiment. FIG. 10B is a left side view of the illumination device 10, wherein a mirror 116 is shown by the broken line to see through the lamps 101 through 104.

As shown in FIGS. 10A and 10B, the lamps 101 through 104 are arranged on an identical plane i. e. Y-Z plane in such a manner that the lamps 101 through 104 are directed in an identical direction i.e. X-axis direction. Light beams emitted from the lamps 101 through 104 are reflected in an identical direction i.e. Y-axis direction by the mirror 116. A rectangular transparent area i.e. a non-mirror area 116a is formed in the middle of the mirror 116. A lamp 105 is arranged at such a position that light beams emitted therefrom are transmitted through the transparent area 116a. The light emission direction of the lamp 105 is aligned in a direction i.e. Y-axis direction perpendicular to the light emission directions of the lamps 101 through 104.

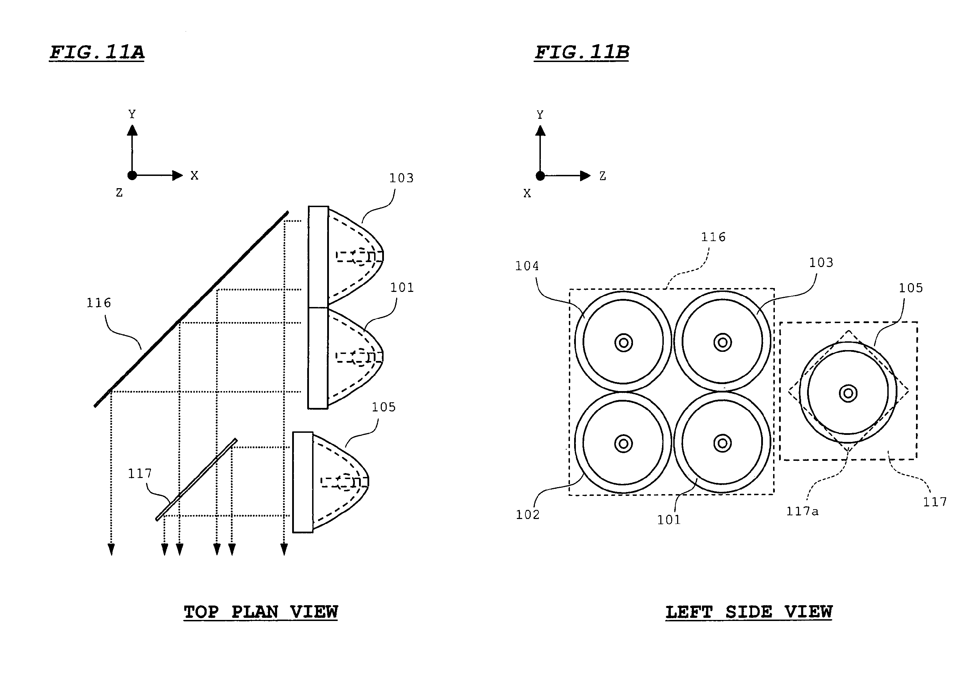

FIGS. 11A and 11B are diagrams showing a modification of the illumination device 10 of the third embodiment. Similarly to FIG. 10B, FIG. 11B is a left side view of the illumination device 10, wherein mirrors 116 and 117 are shown by the broken lines to see through the lamps 101 through 104.

Unlike the arrangement shown in FIGS. 10A and 10B, in the modification shown in FIGS. 11A and 11B, the lamp 105 and the mirror 117 are arranged anterior to the lamps 101 through 104 and the mirror 116. The entire surface of the mirror 116 serves as a mirror surface, without forming the transparent area 116a in the middle of the mirror 116.

In the above arrangement, light beams in the vicinity area of the optical axis center of the illumination device 10 among the light beams reflected on the mirror 116 are blocked by a mirror portion 117a of the mirror 117. Light beams emitted from the lamp 105 are reflected on the mirror portion 117a and guided to the vicinity area of the optical axis center of the illumination device 10. The mirror portion 117a is formed in the middle of the mirror 117, and an outer portion of the mirror 117 other than the mirror portion 117a is transparent.

In the third embodiment, the lamps 101 through 104 are arranged on an identical plane i.e. Y-Z plane in such a manner that all of the lamps 101 through 104 are directed in an identical direction i.e. X-axis direction. Accordingly, as compared with the first and the second embodiments, the third embodiment is advantageous in reducing the size of the illumination device 10 in X-axis direction. Also, since the mirror 116 is provided as means for reflecting light from the lamps 101 through 104, the third embodiment is advantageous in simplifying the arrangement of the illumination device 10 and reducing the number of parts constituting the illumination device 10. Also, in the modification shown in FIGS. 11A and 11B, the optical axes of the lamps 101 through 105 are aligned in parallel to each other. Accordingly, similarly to the second embodiment, the modification enables to increase the number of arrangement patterns of the illumination device 10, thereby providing flexible use of the projector.

<Fourth Embodiment>

In the fourth embodiment, one or more lenses are arranged on an optical path for transmitting light beams emitted from a lamp 105 to reduce the beam diameter of light from the lamp 105.

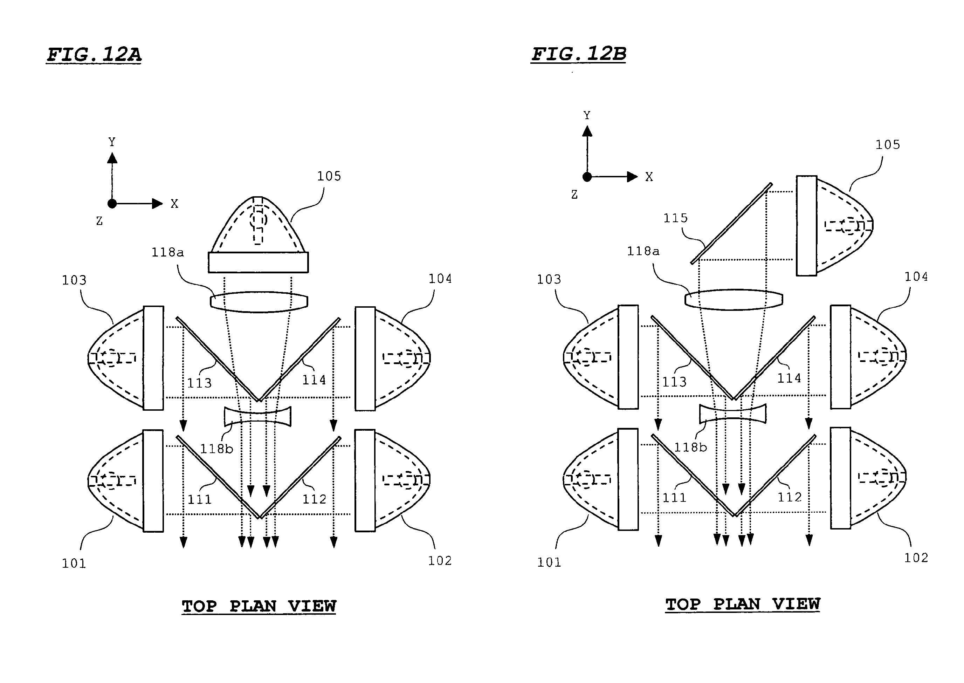

FIGS. 12A and 12B are diagrams each showing an arrangement of an illumination device 10 in accordance with the fourth embodiment. FIG. 12A shows an arrangement wherein a lens is provided in the illumination device 10 of the first embodiment, and FIG. 12B shows an arrangement, wherein a lens is provided in the illumination device 10 of the second embodiment.

As shown in FIGS. 12A and 12B, in each of the arrangements, a convex lens 118a and a concave lens 118b are arranged on an optical path for transmitting light beams emitted from the lamp 105. Light beams from the lamp 105 have the beam diameter thereof reduced by the convex lens 118a, and then are brought back into substantially parallel beams through the concave lens 118b.

In the above arrangements, since the beam diameter of light from the lamp 105 is reduced by the convex lens 118a and the concave lens 118b, the size of cutaway portions of mirrors 111 through 114 can be reduced. Thereby, the light use efficiency of lamps 101 through 104 can be enhanced.

(N-lamp arrangement)

In the foregoing embodiments, the five lamps 101 through 105 are provided in the illumination device 10. The number of lamps is not limited to five, but lamps of a certain number other than five may be provided in the illumination device 10. Although an increased number of lamps enables to increase the light amount of illumination light, the increased number of lamps may increase the number of parts and the production cost. Also, a measure on the arrangement pattern of lamps and mirrors should be provided, or a countermeasure for preventing an increase in size of the illumination device should be provided. On the other hand, a reduced number of lamps enables to reduce the number of parts and the production cost, and reduce the size of the illumination device. However, the reduced number of lamps may cause a drawback that the light amount of illumination light may be lowered.

In the following, arrangements (fifth to seventh embodiments) in the case where the number of lamps is changed are described.

<Fifth Embodiment>

In the fifth embodiment, the number of lamps is reduced from five to four.

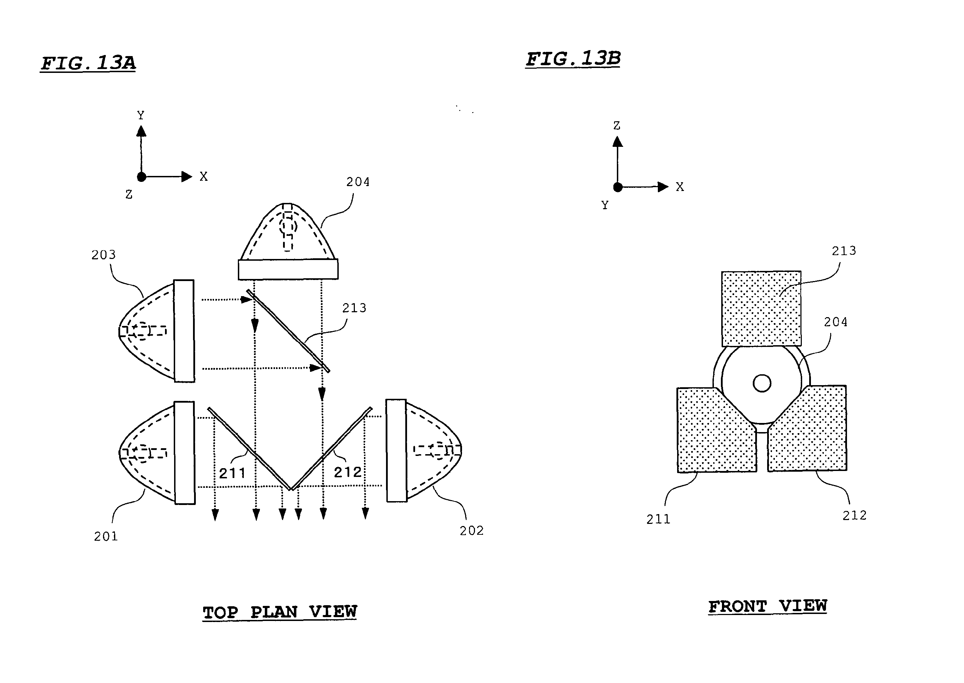

FIGS. 13A and 13B are diagrams showing an arrangement of the illumination device 10 of the fifth embodiment. In FIG. 13B, for simplifying the description, merely the arrangement of mirrors 211 through 213 is illustrated, and lamps 201 through 204 are not illustrated.

As shown in FIGS. 13A and 13B, the lamps 201 through 203 are arranged at such a position that the light emission directions thereof are aligned in X-axis direction. The arranged positions of the lamps 201 and 202, and the lamp 203 are displaced from each other by a certain distance in Z-axis direction in FIGS. 13A and 13B.

Light beams emitted from the lamps 201 through 203 are reflected in an identical direction i.e. Y-axis direction by the mirrors 211 through 213, respectively. The mirror 211, 212 has a pentagonal shape obtained by cutting away one vertex portion of a rectangle. As shown in FIG. 13B, the mirror 211, 212 is arranged at such a position that a vertex of the cutaway portion thereof is aligned with the center of the optical axis of the illumination device 10. The lamp 204 is arranged at such a position that light beams emitted therefrom are transmitted through the cutaway portions of the mirrors 211 and 212. The light emission direction of the lamp 204 is aligned in a direction i.e. Y-axis direction perpendicular to the light emission directions of the lamps 201 through 203.

In the fifth embodiment, since the number of lamps is reduced by one, as compared with the first embodiment, the number of parts and the production cost can be reduced, and the size of the illumination device can be reduced. In the fifth embodiment, however, the light amount of illumination light may be lowered, as compared with the first embodiment, as the number of lamps is reduced.

In the arrangement shown in FIGS. 13A and 13B, the optical axis of the lamp 204 perpendicularly intersects with the optical axes of the lamps 201 through 203. Alternatively, similarly to the second embodiment, the lamp 204 may be arranged at such a position that the optical axis thereof is aligned in parallel to the optical axes of the lamps 201 through 203 by additionally providing a mirror.

<Sixth Embodiment>

In the sixth embodiment, the number of lamps is increased from five to seven.

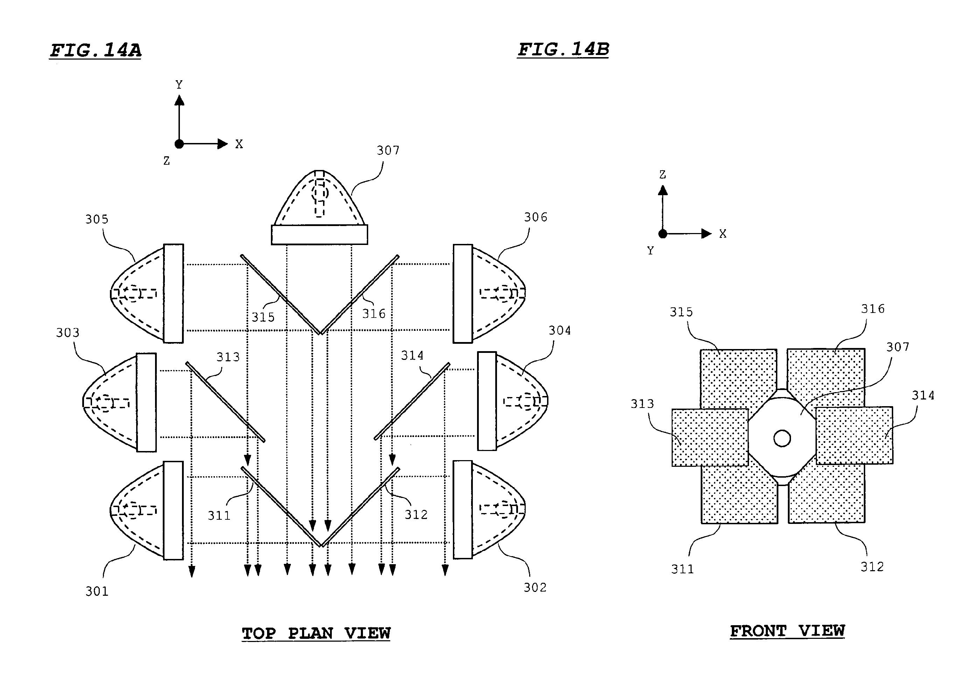

FIGS. 14A and 14B are diagrams showing an arrangement of an illumination device 10 in accordance with the sixth embodiment. In FIG. 14B, for simplifying the description, merely the arrangement of mirrors 311 through 316 is illustrated, and lamps 301 through 307 are not illustrated.

As shown in FIGS. 14A and 14B, the lamps 301 through 306 are arranged in such a manner that the light emission directions thereof are aligned in X-axis direction. The arranged positions of the lamps 301 and 302, the lamps 303 and 304, and the lamps 305 and 306 are displaced from each other by a certain distance in Z-axis direction in FIGS. 14A and 14B.

Light beams emitted from the lamps 301 through 306 are reflected in an identical direction i.e. Y-axis direction by the mirrors 311 through 316, respectively. The mirror 311, 312, 315, 316 has a pentagonal shape obtained by cutting away one vertex portion of a rectangle. As shown in FIG. 14B, the mirror 311, 312, 315, 316 is arranged at such a position that a vertex of the cutaway portion thereof is aligned with the center of the optical axis of the illumination device 10. The lamp 307 is arranged at such a position that light beams emitted therefrom are transmitted through the cutaway portions of the mirrors 311, 312, 315, and 316. The light emission direction of the lamp 307 is aligned in a direction i.e. Y-axis direction perpendicular to the light emission directions of the lamps 301 through 306.

In the sixth embodiment, since the number of lamps is increased by two, as compared with the first embodiment, the light amount of illumination light can be increased. However, since the number of lamps and the number of mirrors are increased by two, respectively, the production cost may be increased, and the size of the illumination device may be increased by the increased numbers of lamps and mirrors. The lamp 307 may be arranged at such a position that the light emission direction thereof is aligned in X-axis direction, by providing a mirror, in the similar manner as the lamp 105 described in the second embodiment referring to FIG 8A.

<Seventh Embodiment>

In the seventh embodiment, the number of lamps is increased from five to eight.

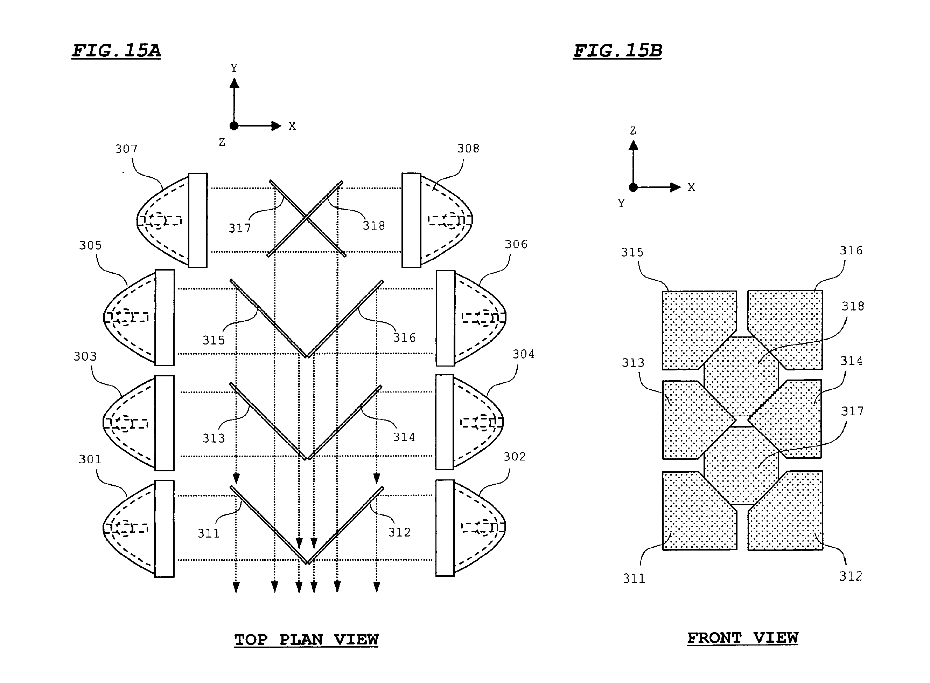

FIGS. 15A and 15B are diagrams showing an arrangement of an illumination device 10 in accordance with the seventh embodiment. In FIG. 15B, for simplifying the description, merely the arrangement of mirrors 311 through 318 is illustrated, and lamps 301 through 308 are not illustrated.

As shown in FIGS. 15A and 15B, the lamps 301 through 308 are arranged at such a position that the light emission directions thereof are aligned in X-axis direction. The arranged positions of the lamps 301 and 302, the lamps 303 and 304, and the lamps 305 and 306 are displaced from each other by a certain distance in Z-axis direction in FIGS. 15A and 15B. Also, the arranged position of the lamps 307 and 308 is displaced from the arranged position of the other lamps by a certain distance in Z-axis direction.

Light beams emitted from the lamps 301 through 308 are reflected in an identical direction i.e. Y-axis direction by the mirrors 311 through 318, respectively. The mirror 311, 312, 315, 316 has a pentagonal shape obtained by cutting away one vertex portion of a rectangle. The mirror 313, 314 has a pentagonal shape obtained by cutting away two vertex portions of a rectangle. As shown in FIG. 15B, the mirrors 311 and 312, 313 and 314, and 315 and 316 are arranged at such a position that vertices of the cutaway portions thereof oppose to each other. The mirror 317, 318 is arranged at such a position that light beams emitted from the lamp 307, 308 are reflected thereon and transmitted through the cutaway portions of the mirrors 311 through 316.

In the seventh embodiment, since the number of lamps is increased by three, as compared with the first and the second embodiments, the light amount of illumination light can be increased. However, since the number of lamps and the number of mirrors are increased, the production cost may be increased, and the size of the illumination device may be increased by the increased numbers of lamps and mirrors. In the arrangement shown in FIGS. 15A and 15B, since the optical axes of the lamps 301 through 308 are aligned in parallel to each other, similarly to the second embodiment, the seventh embodiment is advantageous in increasing the number of arrangement patterns of the illumination device 10, thereby providing flexible use of the projector.

<Eighth Embodiment>

In the eighth embodiment, a prism array is provided, in place of a mirror, to guide light beams from lamps to an illumination system. The prism array to be used in the eighth embodiment may be the one recited in WO2004/088413.

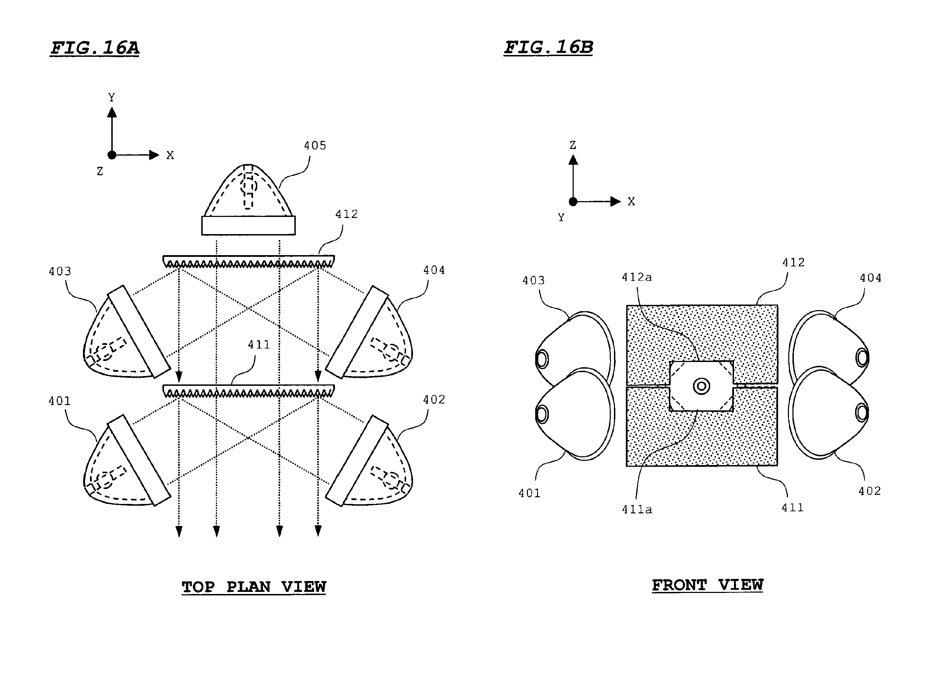

FIGS. 16A and 16B are diagrams showing an arrangement of an illumination device 10 in accordance with the eighth embodiment. As shown in FIGS. 16A and 16B, the illumination device 10 includes five lamps 401 through 405, and two prism arrays 411 and 412. Among the constituent elements, the lamps 401 through 404 are arranged at such a position that light beams from the lamps 401 and 402 are incident onto the prism array 411 in an oblique direction, and light beams from the lamps 403 and 404 are incident onto the prism array 412 in an oblique direction. The arranged positions of the lamps 401 and 402, and the lamps 403 and 404 are displaced from each other by a certain distance in Z-axis direction in FIGS. 16A and 16B.

Light beams emitted from the lamps 401 through 404 are reflected in an identical direction i.e. Y-axis direction by the corresponding prism array 411, 412. The prism array 411, 412 has a rectangular cutaway portion 411a, 412a, which is formed in the middle of one side of a rectangle. As shown in FIGS. 16B, the prism array 411, 412 is arranged at such a position that the cutaway portion 411a, 412a is aligned with the center of the optical axis of the illumination device 10. The lamp 405 is arranged at such a position that light beams emitted therefrom are transmitted through the cutaway portions 411a and 412a. The light emission direction of the lamp 405 is aligned in a direction i.e. Y-axis direction perpendicular to the light emission directions of the lamps 401 through 404.

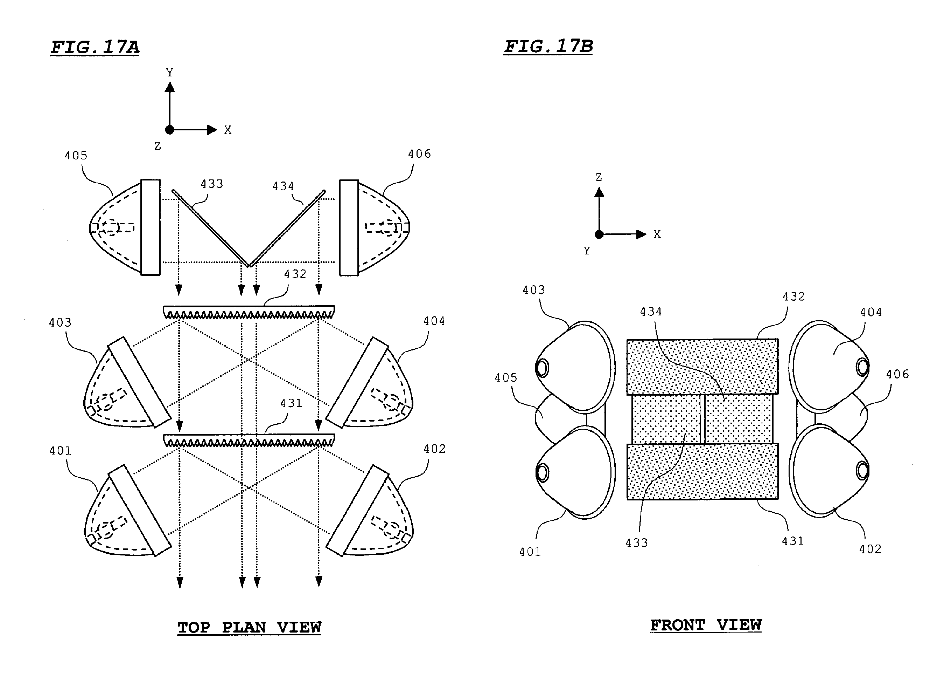

FIGS. 17A and 17B are diagrams showing a modification of the illumination device 10 of the eighth embodiment.

As shown in FIGS. 17A and 17B, the illumination device 10 includes six lamps 401 through 406, two prism arrays 431 and 432, and two mirrors 433 and 434. Among the constituent elements, the lamps 401 through 404 are arranged at such a position that light beams from the lamps 401 and 402 are incident onto the prism array 431 in an oblique direction, and light beams from the lamps 403 and 404 are incident onto the prism array 432 in an oblique direction. The arranged positions of the lamps 401 and 402, the lamps 403 and 404, and the lamps 405 and 406 are displaced from each other by a certain distance in Z-axis direction in FIGS. 17A and 17B.

Light beams emitted from the lamps 401 through 404 are reflected on the corresponding prism array 431, 432 in an identical direction i.e. Y-axis direction, respectively. Also, light beams emitted from the lamps 405 and 406 are reflected on the mirrors 433 and 434 in an identical direction i. e. Y-axis direction, respectively.

As shown in FIG. 17B, the prism arrays 431 and 432 are arranged at such a position as to define a clearance of a certain distance in Z-axis direction. The lamps 405 and 406, and the mirrors 433 and 434 are arranged at such a position that light beams emitted from the lamps 405 and 406 are reflected on the mirrors 433 and 434, and transmitted through the clearance.


<Ninth Embodiment>

In the arrangement shown in FIG. 1, after the R beams, the G beams, and the B beams are modulated by the corresponding liquid crystal panels, respectively, the modulated beams are combined by the dichroic prism 20 for projection onto a projection plane by the projection lens 35. In the above arrangement, light beams (hereinafter, called as "Ye beams") in a wavelength band corresponding to yellow are cut off, and the R beams, the G beams, and the B beams are combined into modulated image light beams by the dichroic prism 20. In the arrangement, if the cut-off Ye beams are effectively superimposed on modulated image light beams, higher luminance can be secured for a projection image. In other words, modulated image light beams with higher luminance can be more advantageously secured by combining the illumination device 10 shown in any one of the first through the eighth embodiments, and an optical system for superimposing Ye beams on modulated image light beams.

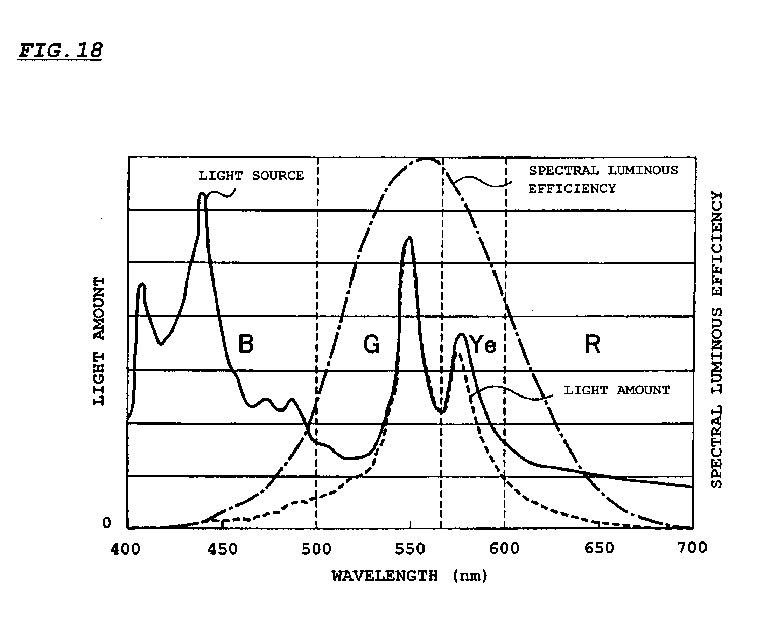

FIG. 18 is a diagram showing a general characteristic tendency on lamp light amount and spectral luminous efficiency. In FIG. 18, wavelength bands defined by the dotted lines respectively show wavelengths bands of B beams, G beams, Ye beams, and R beams. A line attached with the indication "light source" is a characteristic curve showing a relation between wavelength and energy value.

As shown in FIG. 18, the light amount of a lamp has a peak in the wavelength band of G beams and the wavelength band of Ye beams. The spectral luminous efficiency of light beams to be emitted from the lamp has a peak in the wavelength band of G beams. The spectral luminous efficiency is gradually reduced, as the wavelength is away from the wavelength band of G beams. The characteristic diagram shows that the luminance of a projection image can be significantly increased by superimposing Ye beams on modulated image light beams, in addition to R beams, G beams, and B beams.

In the following, configuration examples of an optical system in the case where Ye beams are superimposed on modulated image light beams are described. In the following configuration examples, elements substantially identical or equivalent to those in the foregoing embodiments are indicated with the same reference numerals, and description thereof will be omitted herein.

In the following configuration examples, the five-lamp illumination device shown in FIGS. 8A and 8B is used as the illumination device 10. The illumination device to be used in the ninth embodiment is not limited to the illumination device shown in FIGS. 8A and 8B. It is needless to say that any one of the illumination devices shown in the foregoing embodiments other than the above may be applied. In the following configuration examples, slight improvement is added to the arrangement of the illumination device 10 shown in FIGS. 8A and 8B.

<Configuration Example 1>

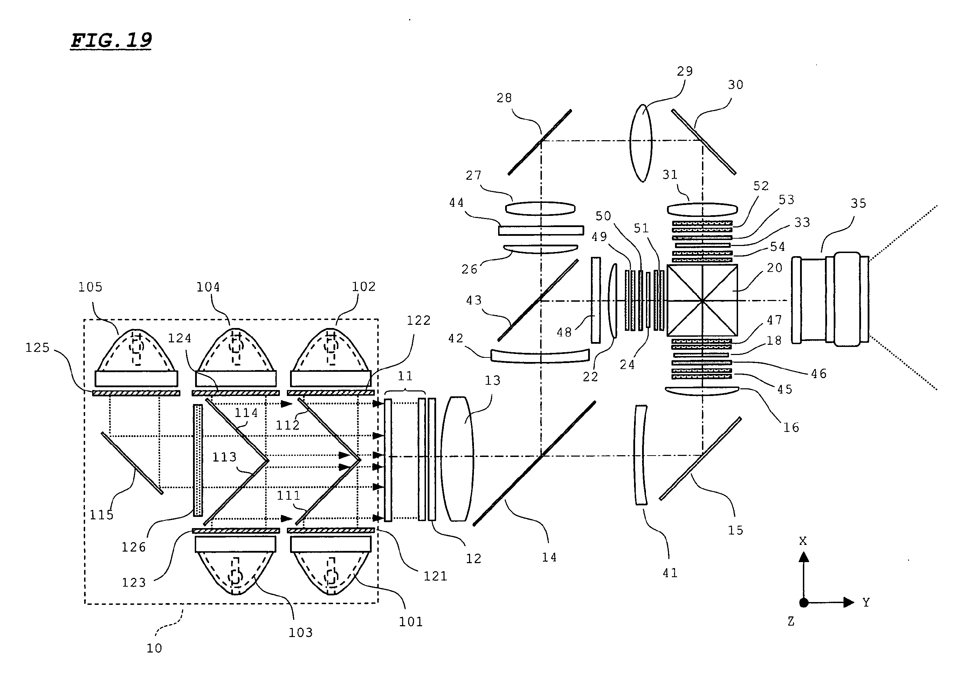

FIG. 19 shows an arrangement of a projector in Configuration Example 1.

First, an illumination device 10 is described. As described above, in Configuration Example 1, the five-lamp illumination device shown in FIGS. 8A and 8B is used as the illumination device 10 except that in Configuration Example 1, UV cutoff filters 121 through 125, and an aperture 126 are provided in addition to constituent elements corresponding to the constituent elements of the arrangement shown in FIGS. 8A and 8B.

The UV cutoff filter 121, 122, 123, 124, 125 is arranged in the vicinity of an exit end of a lamp 101, 102, 103, 104, 105 respectively to cut off ultraviolet rays included in light beams emitted from the lamp 101, 102, 103, 104, 105. The ultraviolet rays are unwanted light which should not be superimposed on modulated image light beams. Because of a short wavelength, the ultraviolet rays may likely adversely affect optical components. In view of the above, in the arrangement of FIG. 19, the UV cutoff filters 121 through 125 are provided to cut off unwanted ultraviolet rays.

The aperture 126 is adapted to control the beam shape of light to be emitted from the lamp 105 in such a manner that the light from the lamp 105 may not impinge on the backside surface of a mirror 111, 112, 113, 114. If the aperture 126 is not provided, light from the lamp 105 may be reflected on the backside surface of the mirror 111, 112, 113, 114, and incident onto one of the lamps 101 through 104, which may shorten the life of the corresponding lamp. In view of the above drawback, in the arrangement shown in FIG. 19, the aperture 126 is provided to prevent unwanted light reflected on the backside surface of the mirror 111, 112, 113, 114 from being incident onto one of the lamps 101 through 104. Alternatively, reflection preventing means such as a reflection preventing film may be attached to the backside surface of the mirror 111, 112, 113, 114, in place of the aperture 126.

In the following, an arrangement from an integrator 11 to a projection lens 35 is described. Configuration Example 1 is different from the arrangement shown in FIG. 1 in that: condenser lenses 41 and 42, a UV cutoff filter 44, optical compensators 46, 50, and 53, and a Ye superimposing element 48 are additionally provided; and that a dichroic mirror 43, incident-side polarizers 45, 49, and 52, and output-side polarizers 47, 51, and 54 are modified.

In Configuration Example 1, the dichroic mirror 43 is modified in such a manner as to reflect G beams and Ye beams, and transmit B beams. The incident-side polarizers 45, 49, and 52, and the output-side polarizers 47, 51, and 54 each has a two-piece construction. Use of the two-piece construction for the polarizers enables to prevent damage of the polarizers.

Specifically, in Configuration Example 1, the light amount of light to be emitted from the illumination device 10 is considerably increased, as described above. As a result, the light amount of light to be incident onto the incident-side polarizer and the output-side polarizer arranged in front of and behind liquid crystal panel 18, 24, 33 may be increased. The increased light amount of light to be incident onto the polarizer may increase the light amount of light to be absorbed by the polarizer at the time light transmits through the polarizer. Consequently, a large exothermic heat may be generated by the light absorption. If the polarizer is constituted of one polarizing piece, the large exothermic heat may damage the polarizer. In particular, a considerably large amount of exothermic heat may be generated in a polarizer for transmitting B beams having a short wavelength, and it is highly likely that the polarizer may be damaged. In order to avoid the drawback, in Configuration Example 1, the incident-side polarizers 45, 49, and 52, and the output-side polarizers 47, 51, and 54 each have a two-piece construction to prevent damage of the polarizer by the exothermic heat.

Specifically, concerning the two polarizing pieces constituting each of the incident-side polarizers 45, 49, and 52, and the output-side polarizers 47, 51, and 54, one of the polarizing pieces away from a dichroic prism 20 is adapted to roughly align the polarization direction, and the other one of the polarizing pieces closer to the dichroic prism 20 is adapted to finely align the polarization direction. This arrangement enables to release the exothermic heat generated in the polarizer, thereby preventing damage of the polarizer.

In addition to the above, half wavelength plates (not shown) for rotating the polarization directions of R beams and B beams by 90 degrees are provided for the incident-side polarizer 45 for R beams, and the incident-side polarizer 52 for B beams, respectively. In the above arrangement, R beams and B beams are incident onto the reflection plane of the dichroic prism 20 as S-polarized beams, thereby enhancing the reflection efficiency of R beams and B beams with respect to the dichroic prism 20. A half wavelength plate is not provided for the incident-side polarizer 49 for G beams (and Ye beams). Accordingly, G beams (and Ye beams) are incident onto the reflection plane of the dichroic prism 20 as P-polarized beams, thereby enhancing the transmission efficiency of G beams (and Ye beams) with respect to the dichroic prism 20.

In the arrangement shown in FIG. 19, light beams emitted from the illumination device 10 are incident onto a dichroic mirror 14 via the integrator 11, a PBS array 12, and a condenser lens 13. Among the light beams, R beams are transmitted through the dichroic mirror 14, and the light beams other than the R beams are reflected on the dichroic mirror 14. The R beams transmitted through the dichroic mirror 14 are incident onto the dichroic prism 20 via the optical elements from the condenser lens 41 to the output-side polarizer 47.

The light beams reflected on the dichroic mirror 14 are incident onto the dichroic mirror 43 via the condenser lens 42. The dichroic mirror 43 transmits B beams, and reflects G beams and Ye beams, among the incident light beams.

The B beams transmitted through the dichroic mirror 43 are incident onto the dichroic prism 20 via the optical elements from a condenser lens 26 to the output-side polarizer 54. In the process, ultraviolet rays that could not be cut off by the UV cutoff filters 121 through 125 in the illumination device 10 are cut off by the UV cutoff filter 44.

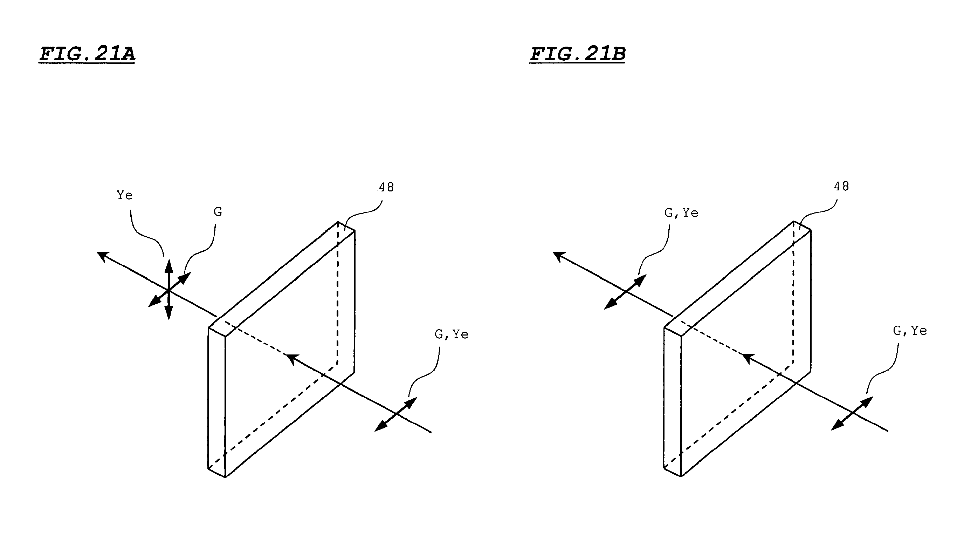

The G beams and the Ye beams reflected on the dichroic mirror 43 are incident onto the Ye superimposing element 48. The Ye superimposing element 48 acts only on the Ye beams among the G beams and the Ye beams, and rotates the polarization direction of Ye beams in accordance with an applied voltage. Thereby, the light amount of Ye beams to be superimposed on modulated image light beams is adjusted. The Ye beam superimposing operation to be performed by the Ye superimposing element 48 is described later referring to FIGS. 21A and 21B.

The G beams and the Ye beams transmitted through the Ye superimposing element 48 are incident onto the dichroic prism 20 via the optical elements from a condenser lens 22 to the output-side polarizer 51.

As described above, R beams, G beams, Ye beams and B beams that have been incident onto the dichroic prism 20 are combined into modulated image light beams by the dichroic prism 20. The modulated image light beams are projected on a projection plane i.e. a screen plane via the projection lens 35.

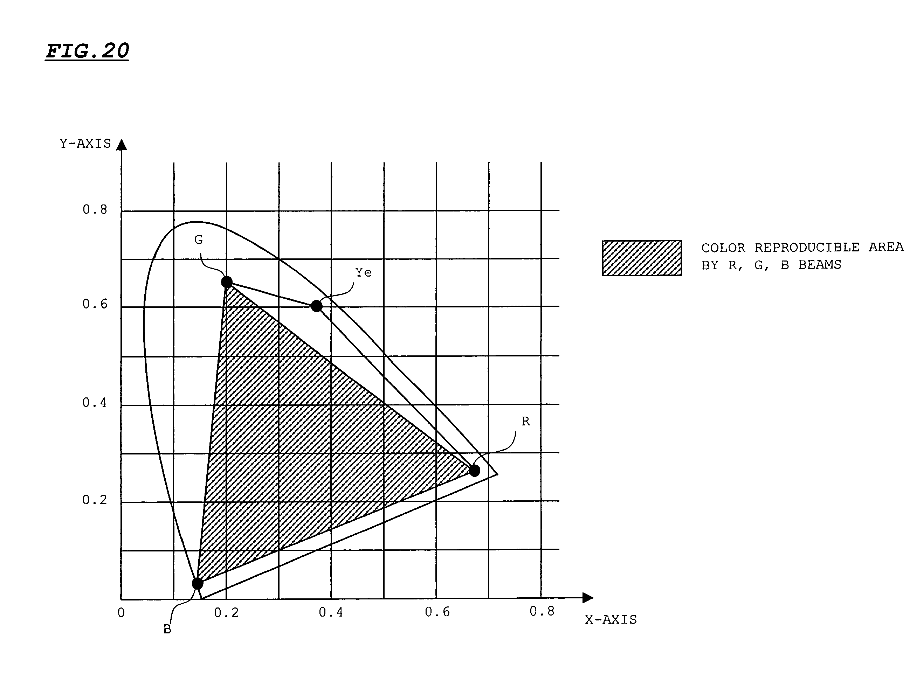

FIG. 20 is a diagram showing a color reproducible area in XYZ color system in the case where the projector in Configuration Example 1 is used. As shown in FIG. 20, the color reproducible area by R beams, G beams, and B beams is indicated by a hatched portion on a chromatic coordinate system. On the other hand, Ye beams are the light capable of reproducing a color other than the color reproducible area by R beams, G beams, and B beams. Accordingly, in Configuration Example 1, higher luminance for a projection image can be secured, and at the same time, the color reproducible area can be increased by superimposing Ye beams on modulated image light beams.

In the following, the Ye beam superimposing operation to be performed by the Ye superimposing element 48 is described referring to FIGS. 21A and 21B. The bi-directional arrows in FIGS. 21A and 21B indicate polarization directions of G beams and Ye beams.

FIG. 21A shows a state that a voltage is not applied to the Ye superimposing element 48. In this state, the Ye superimposing element 48 acts only on Ye beams among G beams and Ye beams incident onto the Ye superimposing element 48, to rotate the polarization direction of Ye beams by 90 degrees. As a result of the operation, the polarization directions of G beams and Ye beams after transmitting through the Ye superimposing element 48 perpendicularly intersect with each other, as shown in FIG. 21A.

FIG. 21B shows a state that a voltage of a predetermined level is applied to the Ye superimposing element 48. In this state, the Ye superimposing element 48 rotates the polarization direction of Ye beams until the polarization direction of Ye beams is aligned in the polarization direction of G beams.

A rotation amount of Ye beams can be flexibly adjusted by adjusting the level of a voltage to be applied to the Ye superimposing element 48.

A notch filter element or an edge filter element may be used as the Ye superimposing element 48, for example.

The notch filter element is operable to adjust only the polarization condition of light beams having a specific wavelength band. For instance, the notch filter element may adjust only the polarization condition of light beams having a wavelength band longer than the wavelength of green and shorter than the wavelength of red, in other words, a wavelength band corresponding to yellow. Use of the notch filter element enables to reduce unwanted light e.g. yellow light components.

The edge filter element is operable to adjust the polarization condition of light beams having a wavelength band other than a specific wavelength band, without adjusting the polarization condition of light beams having the specific wavelength band. For instance, the edge filter element adjusts the polarization conditions of light beams having a wavelength band longer than the wavelength of green, and of light beams having a wavelength band shorter than the wavelength of green, without adjusting the polarization condition of light beams having the wavelength band corresponding to green. Use of the edge filter element enables to enhance the color purity of light beams having a specific wavelength band e.g. green light components.

In Configuration Example 1, the position of the incident-side polarizer 49 is adjusted in such a manner that the orientation of the transmission axis thereof is aligned in parallel to the polarization direction of G beams. Consequently, in the case where a voltage is not applied to the Ye superimposing element 48, as shown in FIG. 21A, the polarization direction of Ye beams intersects perpendicularly to the orientation of the transmission axis of the incident-side polarizer 49. Accordingly, although the G beams are transmitted through the incident-side polarizer 49, the Ye beams are blocked by the incident-side polarizer 49.

On the other hand, as shown in FIG. 21B, in the case where a voltage of a predetermined level is applied to the Ye superimposing element 48, both of the polarization directions of G beams and Ye beams are aligned in parallel to the orientation of the transmission axis of the incident-side polarizer 49, thereby transmitting both of the G beams and the Ye beams through the incident-side polarizer 49.

Also, changing a tilt angle of the polarization direction of Ye beams with respect to the orientation of the transmission axis of the incident-side polarizer 49 by adjusting the voltage to be applied to the Ye superimposing element 48 enables to transmit the Ye beams of an intended light amount in accordance with the tilt angle through the incident-side polarizer 49.

In Configuration Example 1, the light amount of Ye beams to be superimposed on modulated image light beams can be controlled by controlling the voltage to be applied to the Ye superimposing element 48. Thereby, the luminance and the tint of a projection image can be adjusted by controlling the voltage to be applied to the Ye superimposing element 48.

It is desirable to adjust dynamically the applied voltage in accordance with a video signal. For instance, the light amount of Ye beams to be superimposed on modulated image light beams can be dynamically changed in accordance with the brightness of an image to be expressed by a video signal. Alternatively, the light amount of Ye beams to be superimposed on modulated image light beams can be dynamically changed by adding a tint to be reproduced.

As described above, in Configuration Example 1, higher luminance for a projection image can be secured, and at the same time, the color reproducible area can be increased by superimposing Ye beams on modulated image light beams. Further, an enhanced visual effect for a projection image can be obtained by dynamically changing the light amount of Ye beams to be superimposed on modulated image light beams in accordance with the modulated image light beams.

<Configuration Example 2>

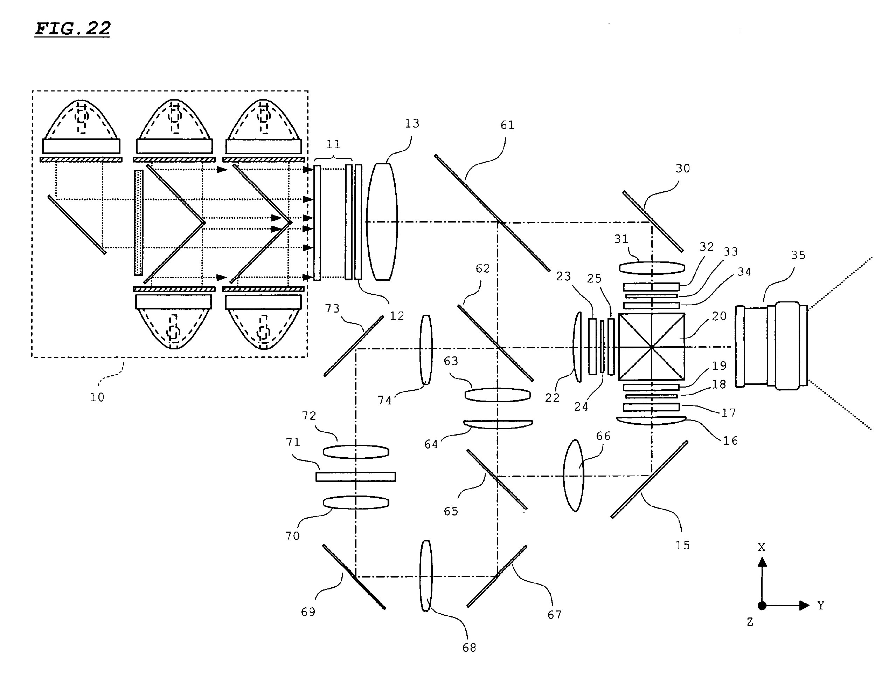

FIG. 22 is a diagram showing an arrangement of a projector in Configuration Example 2. An illumination device 10 in Configuration Example 2 is substantially the same as the illumination device 10 in Configuration Example 1. In Configuration Example 2, incident-side polarizers 17, 23, and 32, and output-side polarizers 19, 25, and 34 each has a one-piece construction in FIG.22. Similarly to the incident-side polarizers 45, 49, and 52, and the output-side polarizer 47, 51, and 54 in Configuration Example 1, the incident-side polarizers 17, 23, and 32, and the output-side polarizers 19, 25, and 34 each may have a two-piece construction, according to needs. In Configuration Example 2, although constituent elements corresponding to the optical compensators 46, 50, and 53, and the UV cutoff filter 44 in Configuration Example 1 are not illustrated, the constituent elements may be provided at an appropriate position on a corresponding optical path, according to needs.

In Configuration Example 2, the optical elements from a dichroic mirror 65 to a relay lens 74 are provided as an optical system for modulating Ye beams and superimposing the modulated Ye beams on modulated image light beams. In Configuration Example 1, the optical system is configured in such a manner that R beams are initially separated from the light beams to be emitted from the illumination device 10. In Configuration Example 2, an optical system is configured to initially separate B beams.

Light beams emitted from the illumination device 10 are incident onto a dichroic mirror 61 via an integrator 11, a PBS array 12, and a condenser lens 13. Among the incident light beams, B beams are transmitted through the dichroic mirror 61, and the light beams other than the B beams are reflected on the dichroic mirror 61. The B beams transmitted through the dichroic mirror 61 are incident onto a dichroic prism 20 via the optical elements from a mirror 30 to the output-side polarizer 34.

Among the light beams reflected on the dichroic mirror. 61, G beams are reflected on a dichroic mirror 62, and the other beams are transmitted through the dichroic mirror 62. The G beams reflected on the dichroic mirror 62 are incident onto the dichroic prism 20 via the optical elements from a condenser lens 22 to the output-side polarizer 25.

The light beams transmitted through the dichroic mirror 62 are incident onto the dichroic mirror 65 via a condenser lens 63 and a relay lens 64. The dichroic mirror 65 reflects R beams and transmits Ye beams among the incident light beams. The R beams reflected on the dichroic mirror 65 are incident onto the dichroic prism 20 via the optical elements from a relay lens 66 to the output-side polarizer 19.

The Ye beams transmitted through the dichroic mirror 65 are incident onto a Ye superimposing element 71 via mirrors 67 and 69, and relay lenses 68 and 70. Similarly to the Ye superimposing element 48 in Configuration Example 1, the Ye superimposing element 71 is an element for rotating the polarization direction of Ye beams in accordance with an applied voltage. In Configuration Example 2, since only the Ye beams are incident onto the Ye superimposing element 71, a liquid crystal panel may be used as the Ye superimposing element 71.

The Ye beams transmitted through the Ye superimposing element 71 are incident onto the dichroic mirror 62 again via a relay lens 72, the relay lens 74, and a mirror 73, and then transmitted through the dichroic mirror 62. Thereafter, the Ye beams propagate along the same optical path as the G beams.

As described above, R beams, G beams, Ye beams and B beams that have been incident onto the dichroic prism 20 are combined into modulated image light beams by the dichroic prism 20. The modulated image light beams are projected on a projection plane i.e. a screen plane via a projection lens 35.

In Configuration Example 2, in the case where a voltage is not applied to the Ye superimposing element 71, the polarization direction of Ye beams is rotated by 90 degrees. Accordingly, in this case, the polarization direction of Ye beams intersects perpendicularly to the polarization direction of G beams. Similarly to Configuration Example 1, the position of the incident-side polarizer 23 is adjusted in such a manner that the orientation of the transmission axis thereof is aligned in parallel to the polarization direction of G beams. Accordingly, in the case where a voltage is not applied to the Ye superimposing element 71, although G beams are transmitted through the incident-side polarizer 23, Ye beams are blocked by the incident-side polarizer 23.

On the other hand, changing a tilt angle of the polarization direction of Ye beams with respect to the orientation of the transmission axis of the incident-side polarizer 23 by adjusting the voltage to be applied to the Ye superimposing element 71 enables to transmit the Ye beams of an intended light amount in accordance with the tilt angle through the incident-side polarizer 23. Accordingly, the light amount of Ye beams to be superimposed on modulated image light beams can be controlled by controlling the voltage to be applied to the Ye superimposing element 71, and the luminance and the tint of a projection image can be adjusted. Similarly to Configuration Example 1, it is desirable to adjust dynamically the applied voltage in accordance with a video signal.

In Configuration Example 2, similarly to Configuration Example 1, higher luminance for a projection image can be secured, and at the same time, the color reproducible area can be increased by superimposing Ye beams on modulated image light beams. Further, an enhanced visual effect for a projection image can be obtained by dynamically changing the light amount of Ye beams to be superimposed on modulated image light beams in accordance with the modulated image light beams.

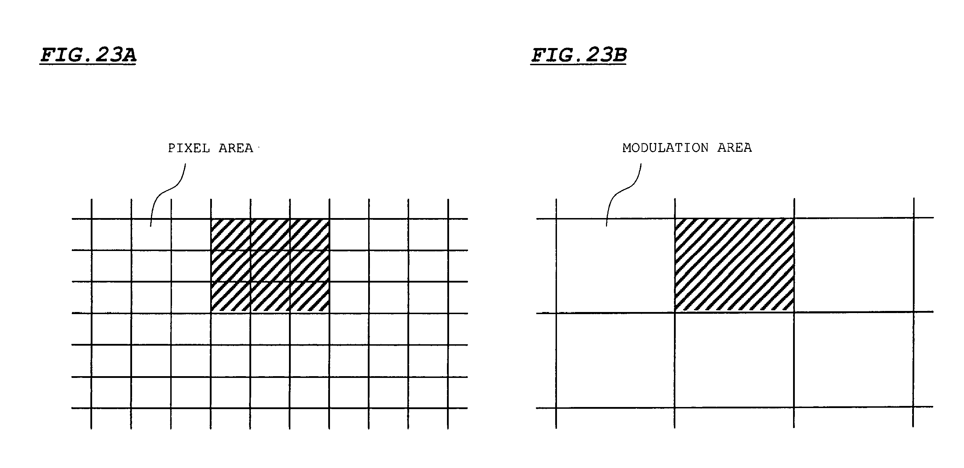

The Ye superimposing element 71 may be so constructed as to rotate the polarization direction of Ye beams with respect to each of incident areas of Ye beams. For instance, one modulation area may be defined on the Ye superimposing element 71 in correspondence to a certain number of pixel areas on the liquid crystal panel 24. FIGS. 23A and 23B are diagrams showing an arrangement i.e. an area dividing example of the Ye superimposing element 71 in the case where one modulation area is defined on the Ye superimposing element 71 in correspondence to nine pixel areas on the liquid crystal panel 24. FIG. 23A shows pixel areas on the liquid crystal panel 24, and FIG. 23B shows modulation areas on the Ye superimposing element 71.

As described above, controlling the rotation of the polarization direction of Ye beams with respect to each of the modulation areas enables to properly adjust the light amount of Ye beams to be superimposed on a projection image with respect to each of the modulation areas. The above arrangement enables to vary a luminance increment by the Ye beam superimposing operation with respect to a bright area and a dark area in a projection image, for instance, which is further advantageous in securing an enhanced visual effect for a projection image. Similarly to Configuration Example 2, in Configuration Example 1, controlling the rotation of the polarization direction of Ye beams with respect to each of modulation areas enables to secure an enhanced visual effect for a projection image.

In the arrangement of FIG. 22, after Ye beams are separated by the dichroic mirror 65, and modulated, the modulated Ye beams are returned to the optical path for G beams. The manner of separating and returning Ye beams is not limited to the above, but may be modified in another way. For instance, in the arrangement shown in FIG. 22, the modulated Ye beams may be returned to the optical path for R beams. Further alternatively, light beams may be separated into B beams and Ye beams by the dichroic mirror 61. Then, the Ye beams may be isolated by replacing the mirror 30 with a dichroic mirror, and the isolated Ye beams may be modulated. Thereafter, the modulated Ye beams may be returned to the optical path for B beams. Further alternatively, the dichroic mirror 65 may be replaced with a reflective polarizer, and a narrowband phase difference plate may be provided between the condenser lens 63 and the relay lens 64 to isolate Ye beams depending on the polarization direction thereof.

<Configuration Example 3>

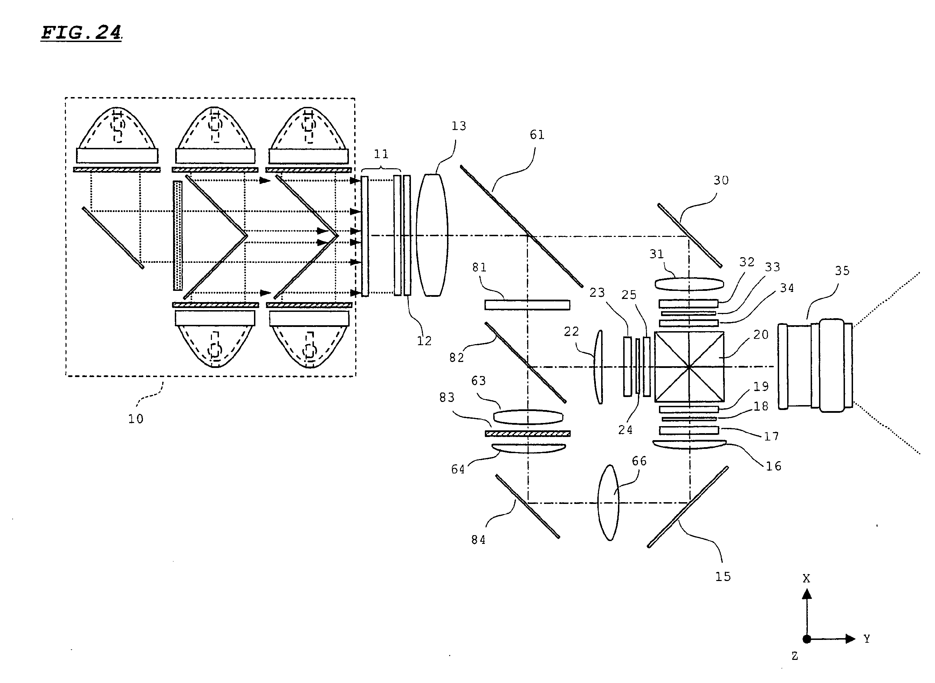

FIG. 24 is a diagram showing an arrangement of a projector in Configuration Example 3. In Configuration Examples 1 and 2, Ye beams are modulated for incidence onto the liquid crystal panel 24 for G beams. In Configuration Example 3, Ye beams are modulated for incidence onto a liquid crystal panel 24 for G beams and a liquid crystal panel 18 for R beams.

In Configuration Example 3, incident-side polarizers 17, 23, and 32, and output-side polarizers 19, 25, and 34 each has a one-piece construction in FIG.24. Similarly to the incident-side polarizers 45, 49, and 52, and the output-side polarizers 47, 51, and 54 in Configuration Example 1, the incident-side polarizers 17, 23, and 32, and the output-side polarizers 19, 25, and 34 each may have a two-piece construction, according to needs. Further, in Configuration Example 3, although constituent elements corresponding to the optical compensators 46, 50, and 53, and the UV cut-off filter 44 in Configuration Example 1 are not illustrated, the constituent elements may be provided at an appropriate position on a corresponding optical path, according to needs.

In Configuration Example 3, similarly to Configuration Example 2, an optical system is configured to initially separate B beams. In Configuration Example 3, constituent elements substantially identical or equivalent to those in Configuration Example 2 are indicated with the same reference numerals. The illumination device 10 in Configuration Example 3 is substantially the same as the illumination device 10 in Configuration Example 1.

Light beams emitted from the illumination device 10 are incident onto a dichroic mirror 61 via an integrator 11, a PBS array 12, and a condenser lens 13. Among the light beams incident onto the dichroic mirror 61, B beams are transmitted through the dichroic mirror 61, and the light beams other than the B beams are reflected on the dichroic mirror 61. The B beams transmitted through the dichroic mirror 61 are incident onto a dichroic prism 20 via the optical elements from a mirror 30 to the output-side polarizer 34.

Among the light beams reflected on the dichroic mirror 61, G beams are incident onto a dichroic mirror 82 having a polarization dependency via a polarization rotating element 81. Similarly to the Ye light valve in Configuration Examples 1 and 2, the polarization rotating element 81 acts only on Ye beams, and rotates the polarization direction of Ye beams in accordance with an applied voltage.

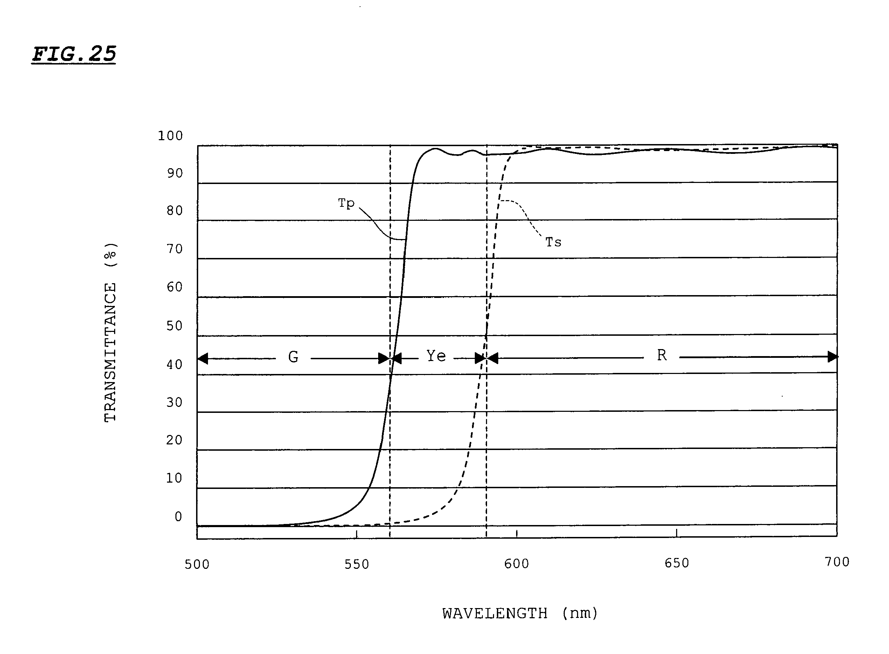

The dichroic mirror 82 has a transmittance characteristic as shown in FIG. 25. In FIG. 25, a line attached with the symbol Tp represents a transmittance characteristic in the case where light beams are incident onto the dichroic mirror 82 in a P-polarized state. A line attached with the symbol Ts represents a transmittance characteristic in the case where light beams are incident onto the dichroic mirror 82 in an S-polarized state.

In Configuration Example 3, G beams and R beams are incident onto the dichroic mirror 82 in an S-polarized state. Accordingly, as is obvious from the characteristic Ts shown in FIG. 25, G beams are reflected on the dichroic mirror 82, and R beams are transmitted through the dichroic mirror 82.

Since the polarization direction of Ye beams is rotated by the polarization rotating element 81, a certain amount of Ye beams is transmitted through the dichroic mirror 82, and a certain amount of Ye beams is reflected on the dichroic mirror 82 with a ratio depending on a rotation amount of the polarization direction of Ye beams.

Specifically, in the case where Ye beams are incident onto the dichroic mirror 82 in a state that the polarization direction of Ye beams is aligned in the polarization directions of G beams and R beams, in other words, in the case where Ye beams are incident onto the dichroic mirror 82 as S-polarized beams, a primary part of the Ye beams is reflected on the dichroic mirror 82, and the reflected Ye beams propagate along the same optical path as the G beams.

On the other hand, in the case where Ye beams are incident onto the dichroic mirror 82 in a state that the polarization direction of Ye beams intersects perpendicularly to the polarization directions of G beams and R beams, in other words, in the case where Ye beams are incident onto the dichroic mirror 82 as P-polarized beams, a primary part of the Ye beams is transmitted through the dichroic mirror 82, and the transmitted Ye beams propagate along the same optical path as the R beams.

In the case where the polarization direction of Ye beams with respect to the dichroic mirror 82 is in an intermediate state between the P-polarized state and the S-polarized state, a certain amount of Ye beams is transmitted through the dichroic mirror 82, and a certain amount of Ye beams is reflected on the dichroic mirror 82 with a ratio depending on a tilt angle of the polarization direction of Ye beams with respect to the polarization direction of P-polarized beams. In other words, in this case, a P-polarized component of Ye beams is transmitted through the dichroic mirror 82, and an S-polarized component of Ye beams is reflected on the dichroic mirror 82. In this case, Ye beams are distributed with a predetermined ratio to the optical path for G beams and the optical path for R beams.

Referring back to FIG. 24, G beams reflected on the dichroic mirror 82 are incident onto the dichroic prism 20 via the optical elements from a condenser lens 22 to the output-side polarizer 25.

On the other hand, R beams and Ye beams transmitted through the dichroic mirror 82 are incident onto a narrowband phase difference plate (half wavelength plate having a wavelength selectivity) 83 via a condenser lens 63. As described above, since the P-polarized component of Ye beams is transmitted through the dichroic mirror 82, the polarization direction of Ye beams after transmitting through the dichroic mirror 82 intersects perpendicularly to the polarization direction of R beams.

The narrowband phase difference plate 83 acts only on Ye beams, and rotates the polarization direction of Ye beams by 90 degrees. By the operation, the polarization direction of Ye beams is aligned in the polarization direction of R beams. Thereafter, the R beams and the Ye beams are incident onto the dichroic prism 20 via the optical elements from a relay lens 64 to the output-side polarizer 19.

As described above, R beams, G beams, Ye beams, and B beams that have been incident onto the dichroic prism 20 are combined into modulated image light beams by the dichroic prism 20. The modulated image light beams are projected on a projection plane i.e. a screen plane via a projection lens 35.

In Configuration Example 3, since Ye beams are superimposed on modulated image light beams via the optical path for G beams and the optical path for R beams, higher luminance for a projection image can be secured. Also, controlling the voltage to be applied to the polarization rotating element 81 enables to change a distribution amount of Ye beams with respect to the optical path for G beams and the optical path for R beams, thereby enabling to adjust a color reproducible area of a projection image.

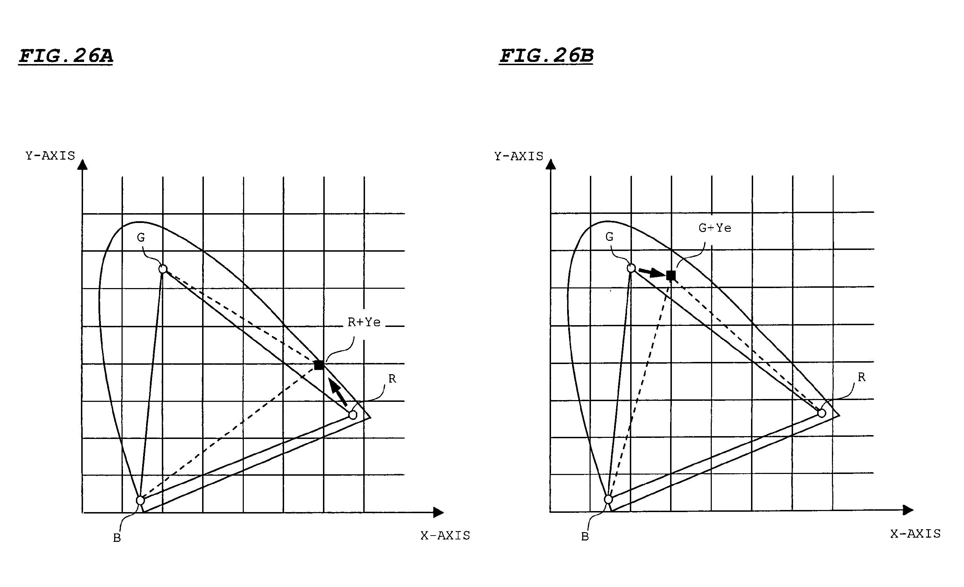

FIG. 26A is a diagram schematically showing a color reproducible area in the case where Ye beams are distributed to the optical path for R beams. In this case, the color reproducible area is changed from an area defined by the solid line to an area defined by the broken line in FIG. 26A. FIG. 26B is a diagram schematically showing a color reproducible area in the case where Ye beams are distributed to the optical path for G beams. In this case, the color reproducible area is changed from an area defined by the solid line to an area defined by the broken line in FIG. 26B.

The voltage to be applied to the polarization rotating element 81 may be fixedly switched in accordance with a mode, or dynamically adjusted in accordance with a video signal. Use of the latter method enables to adjust the tint of a projection image depending on a status of the video signal to be supplied, which is advantageous in securing an enhanced visual effect for a projection image.

In Configuration Example 3, since Ye beams are distributed to either one of the optical path for G beams and the optical path for R beams as necessity, as is obvious from FIGS. 26A and 26B, a green color or a red color having a high purity may not be reproduced.

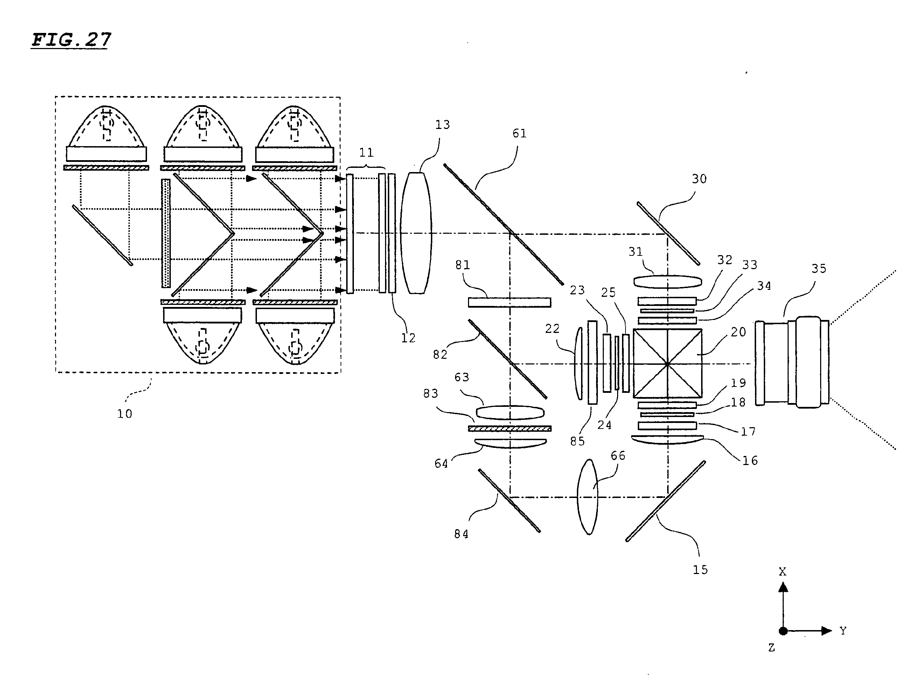

FIG. 27 is a diagram showing an improved arrangement of an optical system to solve the aforementioned disadvantage. In FIG. 27, a polarization rotating element 85 is additionally provided on the optical path for G beams. Similarly to the polarization rotating element 81, the polarization rotating element 85 acts only on Ye beams, and rotates the polarization direction of Ye beams in accordance with an applied voltage.

In the above arrangement, the polarization rotating element 81 is controlled in such a manner that the polarization direction of Ye beams with respect to the dichroic mirror 82 is aligned with the polarization direction of S-polarized beams, and the polarization rotating element 85 is controlled in such a manner that the polarization direction of Ye beams intersects perpendicularly to the orientation of the transmission axis of the incident-side polarizer 23. By the control, only the R beams are allowed to be incident onto the liquid crystal panel 18 for R beams, and only the G beams are allowed to be incident onto the liquid crystal panel 24 for G beams. Thus, in the above arrangement, a red color and a green color having a high purity can be simultaneously reproduced on a projection image.

In the arrangement shown in FIG. 27, the polarization rotating element 85 for blocking Ye beams is arranged on the optical path for G beams. Alternatively, the polarization rotating element 85 may be arranged on the optical path for R beams, in place of the optical path for G beams. The modified arrangement enables to provide substantially the same effect as described above.

In the foregoing, the polarization rotating element 85 is provided to block Ye beams. Additionally, the gradient of Ye beams to be superimposed on G beams or R beams can be more finely controlled, as compared with the arrangement shown in FIG. 24, by controlling the voltage to be applied to the polarization rotating element 85.

If Ye beams are superimposed in the manner described in one of Configuration Examples 1 through 3, a projection image may have less blue light components in some occasion. In view of the disadvantage, the light amount of B beams may be increased by replacing the lamp 105 shown in FIG. 19 with a light source for emitting B beams, for example.

<Configuration Example 4>

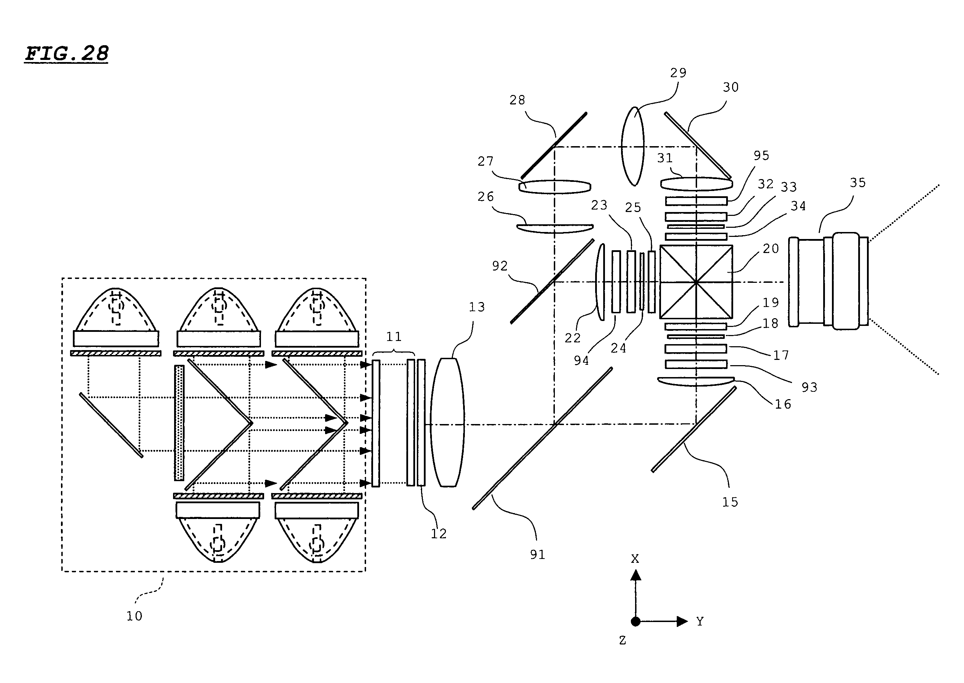

FIG. 28 is a diagram showing an arrangement of a projector in Configuration Example 4. In Configuration Examples 1 through 3, Ye beams are modulated for incidence onto the liquid crystal panel 24 for G beams, or the liquid crystal panel 24 for G beams and the liquid crystal panel 18 for R beams. On the other hand, in Configuration Example 4, the color purities and the light amounts of R beams, G beams, and B beams may be properly adjusted by: separating R beams, G beams, and B beams into Rt beams, Gt beams, and Bt beams as wavelength component beams having a higher color purity in red, green, and blue, and Rr beams, Gr beams, and Br beams as wavelength component beams having a lower color purity in red, green, and blue, respectively; and controlling the incident light amounts of Rr beams, Gr beams, and Br beams onto liquid crystal panels 18, 24, and 33.

In Configuration Example 4, incident-side polarizers 17, 23, and 32, and output-side polarizers 19, 25, and 34 each has a one-piece construction in FIG.28. Similarly to the incident-side polarizers 45, 49, and 52, and the output-side polarizers 47, 51, and 54 in Configuration Example 1, the incident-side polarizers 17, 23, and 32, and the output-side polarizers 19, 25, and 34 each may have a two-piece construction, according to needs. Further, in Configuration Example 4, although constituent elements corresponding to the optical compensators 46, 50, and 53, and the UV cut-off filter 44 and lens 41 and 42 in Configuration Example 1 are not illustrated, the constituent elements may be provided at an appropriate position on a corresponding optical path, according to needs.

Similarly to Configuration Example 1, in Configuration Example 4, an optical system is configured to initially separate R beams. In Configuration Example 4, elements substantially identical or equivalent to those in Configuration Example 1 are indicated with the same reference numerals. The illumination device 10 in Configuration Example 4 is substantially the same as the illumination device 10 in Configuration Example 1.

In Configuration Example 4, R beams (Rt beams and Rr beams), G beams (Gt beams and Gr beams), and B beams (Bt beams and Br beams) are separated by dichroic mirrors 91 and 92, and incident onto a polarization rotating element 93 for R beams, a polarization rotating element 94 for G beams, and a polarization rotating element 95 for B beams, respectively. In Configuration Example 4, the wavelength band of R beams and the wavelength band of G beams are contiguous to each other, and the wavelength band of G beams and the wavelength band of B beams are contiguous to each other. Rr beams are the light beams in a wavelength band (shorter wavelength side) closer to the wavelength band corresponding to yellow than the wavelength band of Rt beams. Br beams are the light beams in a wavelength band (longer wavelength side) closer to the wavelength band corresponding to bluish green than the wavelength band of Bt beams. Gr beams may contain light beams in a wavelength band (longer wavelength side) closer to the wavelength band corresponding to yellow than the wavelength band of Gt beams, and light beams in a wavelength band (shorter wavelength side) closer to the wavelength band corresponding to bluish green than the wavelength band of Gt beams. In Configuration Example 4, Gr beams may contain either one or both of the light beams in the wavelength band corresponding to the longer wavelength side, and the light beams in the wavelength band corresponding to the shorter wavelength side.

The polarization rotating element 93 for R beams acts only on Rr beams among Rt beams and Rr beams, and rotates the polarization direction of Rr beams in accordance with an applied voltage. By the operation, the light amount of Rr beams to be incident onto the liquid crystal panel 18 is adjusted.

In the case where a voltage to be applied to the polarization rotating element 93 for R beams is turned off, the polarization rotating element 93 for R beams acts only on Rr beams among Rt beams and Rr beams incident onto the polarization rotating element 93 for R beams, to rotate the polarization direction of Rr beams by 90 degrees. By the operation, the polarization direction of Rr beams intersects perpendicularly to the orientation of the transmission axis of the incident-side polarizer 17. Thereby, substantially the entire light amount of Rr beams is blocked by the incident-side polarizer 17 to allow only the Rt beams to be incident onto the liquid crystal panel 18.

On the other hand, in the case where a voltage of a predetermined level is applied to the polarization rotating element 93 for R beams, since the polarization rotating element 93 for R beams is inoperable to act on Rr beams to rotate the polarization direction of Rr beams, the Rr beams are incident onto the incident-side polarizer 17 in the same polarization direction as the Rt beams. In this case, both of the polarization directions of Rt beams and Rr beams are aligned in parallel to the orientation of the transmission axis of the incident-side polarizer 17. Thereby, substantially the entire light amount of Rt beams and Rr beams is transmitted through the incident-side polarizer 17, and incident onto the liquid crystal panel 18.

Similarly to the operation of the polarization rotating element 93 for R beams, in the case where a voltage to be applied to the polarization rotating element 94 for G beams is turned off, the polarization rotating element 94 for G beams acts on Gr beams to rotate the polarization direction of Gr beams. Thereby, substantially the entire light amount of Gr beams is cut off by the incident-side polarizer 23. In the case where a voltage of a predetermined level is applied to the polarization rotating element 94 for G beams, the polarization rotating element 94 for G beams is inoperable to act on Gr beams to rotate the polarization direction of.Gr beams. Thereby, substantially the entire light amount of both of Gt beams and Gr beams is transmitted through the incident-side polarizer 23, and incident onto the liquid crystal panel 24.

In the case where a voltage to be applied to the polarization rotating element 95 for B beams is turned off, the polarization rotating element 95 for B beams acts on Br beams to rotate the polarization direction of Br beams. Thereby, substantially the entire light amount of Br beams is cut off by the incident-side polarizer 32. In the case where a voltage of a predetermined level is applied to the polarization rotating element 95 for B beams, the polarization rotating element 95 for B beams is inoperable to act on Br beams to rotate the polarization direction of Br beams. Thereby, substantially the entire light amount of both of Bt beams and Br beams is transmitted through the incident-side polarizer 32, and incident onto the liquid crystal panel 33.

Similarly to the Ye superimposing element in Configuration Example 1, the polarization rotating element 93 for R beams, the polarization rotating element 94 for G beams, and the polarization rotating element 95 for B beams each may be constituted of either one of a notch filter element and an edge filter element. With use of any one of the notch filter element and the edge filter element, the polarization rotating element 93 for R beams, the polarization rotating element 94 for G beams, and the polarization rotating element 95 for B beams are configured to act only on the wavelength band of Rr beams, the wavelength band of Gr beams, and the wavelength band of Br beams, respectively.

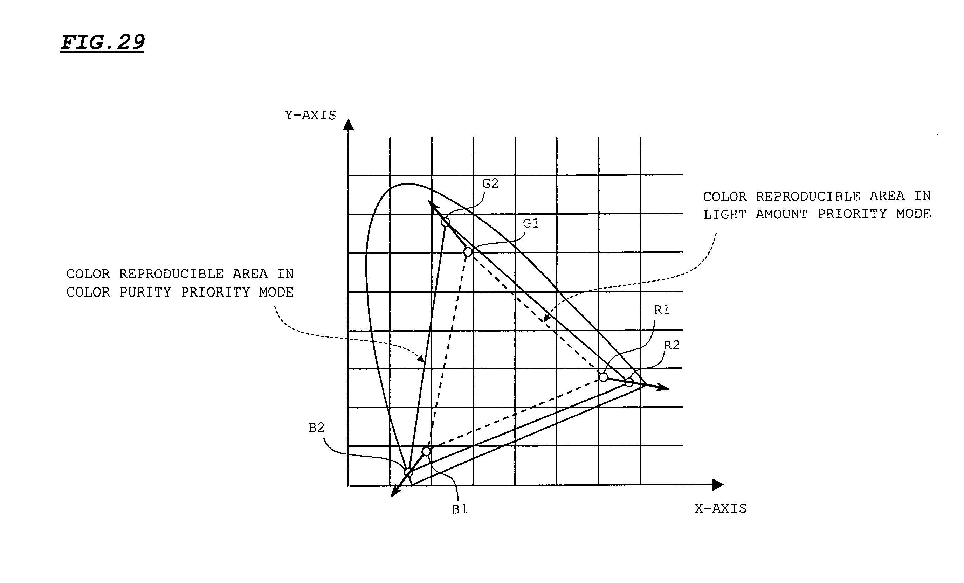

FIG. 29 is a diagram showing an effect to be obtained by Configuration Example 4. In FIG. 29, the light amount priority mode is a mode at which a voltage for rotating the polarization directions of Rr beams, Gr beams, and Br beams by 90 degrees is applied to all the polarization rotating element 93 for R beams, the polarization rotating element 94 for G beams, and the polarization rotating element 95 for B beams; and the color purity priority mode is a mode at which all the voltages to be applied to the polarization rotating element 93 for R beams, the polarization rotating element 94 for G beams, and the polarization rotating element 95 for B beams are turned off.

When the projector is in the light amount priority mode, since Rr beams, Gr beams, and Br beams are respectively incident onto the liquid crystal panels 18, 24, and 33, the total light amount of a projection image is increased by the incidence of Rr beams, Gr beams, and Br beams. However, the incidence of Rr beams, Gr beams, and Br beams may lower the color purity of red, green, and blue. As a result, the color reproducible area of a projection image may be reduced to an area defined by the dotted line in FIG. 29.

On the other hand, when the projector is in the color purity priority mode, Rr beams, Gr beams, and Br beams are not allowed to be incident onto the liquid crystal panels 18, 24, and 33, respectively. As a result, the total light amount of a projection image may be lowered, as compared with a condition that the projector is operated in the light amount priority mode. However, since Rr beams, Gr beams, and Br beams are not incident, the color purities of red, green, and blue are increased. Accordingly, the color reproducible area of a projection image is expanded to an area defined by the solid line in FIG. 29.

As described above, in Configuration Example 4, the light amount i.e. the luminance, and the color reproducibility of a projection image can be optimally adjusted by controlling on/off operations of the polarization rotating element 93 for R beams, the polarization rotating element 94 for G beams, and the polarization rotating element 95 for B beams. The above arrangement enables to provide a projector operable to satisfy the requirements on high luminance and color reproducibility.

In Configuration Example 4, the rotation amounts of the polarization directions of Rr beams, Gr beams, and Br beams can be flexibly adjusted by controlling the voltages to be applied to the polarization rotating element 93 for R beams, the polarization rotating element 94 for G beams, and the polarization rotating element 95 for B beams, respectively. Thereby, the light amounts of Rr beams, Gr beams, and Br beams to be superimposed on modulated image light beams can be properly adjusted. For instance, configuring a control circuit in such a manner that the voltages to be applied to the polarization rotating element 93 for R beams, the polarization rotating element 94 for G beams, and the polarization rotating element 95 for B beams are controlled in accordance with a video signal enables to dynamically adjust the light amounts of Rr beams, Gr beams, and Br beams to be superimposed on modulated image light beams depending on a status of a projection image. Thereby, optimum luminance and color reproducibility can be secured depending on occasions.

The embodiments of the present invention are described in the foregoing. The present invention, however, is not limited to the foregoing embodiments. The embodiments of the present invention may be changed or modified in various ways, other than the above.

The modifications on the mirror arrangement shown in FIGS. 3B through 3C may be applied to the arrangements in the second embodiment and thereafter, according to needs. Also, the hybrid illumination system shown in FIGS. 5A and 5B may be applied to the arrangements in the second embodiment and thereafter, according to needs. The embodiments of the present invention may be changed or modified in various ways, according to needs.

Configuration Examples 1 through 3 in the ninth embodiment correspond to the embodiment of the invention defined in claim 9, and Configuration Example 4 corresponds to the embodiment of the invention defined in claim 10.

**Claims**

1. An illumination device, comprising:

   a first light source unit including a plurality of first light sources;
   a first reflection unit for guiding light beams emitted respectively from the first light sources in an identical direction; and
   a second light source unit including at least one second light source, wherein
   assuming a plane perpendicular to a propagating direction of the light beams emitted from the first light source unit and reflected on the first reflection unit, a center of an optical axis of the second light source is defined in an area, on the plane, where a light amount distribution of the light beams from the first light sources is relatively small, the area being surrounded by centers of optical axes of the first light sources.

2. The illumination device according to claim 1, wherein
   the optical axes of the first light sources are aligned in parallel to each other.

3. The illumination device according to claim 2, wherein
   the optical axis of the second light source is aligned in parallel to the optical axes of the first light sources, and
   the illumination device further includes a second reflection unit for guiding light beams emitted from the second light source in an identical direction of the light beams emitted from the first light source unit and reflected on the first reflection unit.

4. The illumination device according to claim 1, wherein
   the second light source unit is arranged at a position rearward of the first light source unit with respect to the propagating direction of the light beams emitted from the first light source unit and reflected on the first reflection unit, and
   the first reflection unit has a cutaway or a transparent portion at a position where light beams from the second light source unit are transmitted.

5. The illumination device according to claim 1, wherein

at least one lens element is arranged on the optical axis of the second light source.

6. An illumination device, comprising:

four first light sources;
a reflection unit including four mirror surfaces for guiding light beams emitted respectively from the four first light sources in an identical direction, each of the four mirror surfaces being arranged at such a position that a center of an optical axis of the corresponding first light source is aligned with a position of a vertex of a predetermined rectangle, assuming that the rectangle is defined on a plane perpendicular to a propagating direction of the light beams emitted from the first light sources and reflected on the respective corresponding mirror surfaces; and
a second light source, wherein
a center of an optical axis of the second light source is aligned with a center position of the rectangle.

7. The illumination device according to claim 6, wherein
the second light source is arranged at a position away from the plane on which the rectangle is defined than the four mirror surfaces, and
the each of the four mirror surfaces has a cutaway or a transparent portion at a position where light beams from the second light source are transmitted.

8. A projection video display device, comprising:

an illumination device for emitting light beams; and
a light modulation unit for modulating the light beams in accordance with an input video signal to generate modulated image light beams,
the illumination device including:

a first light source unit having a plurality of first light sources;
a first reflection unit for guiding light beams emitted respectively from the first light sources in an identical direction; and
a second light source unit having at least one second light source, wherein

assuming a plane perpendicular to a propagating direction of the light beams emitted from the first light source unit and reflected on the first reflection unit, a center of an optical axis of the second light source is defined in an area, on the plane, where a light amount distribution of the light beams from the first light sources is relatively small, the area being surrounded by centers of optical axes of the first light sources.

9. The projection video display device according to claim 8, wherein
the light modulation unit includes:

an R light valve for modulating the light beams based on a video signal for red;
a G light valve for modulating the light beams based on a video signal for green;
a B light valve for modulating the light beams based on a video signal for blue;
a light guiding optical system for guiding light beams having a wavelength band corresponding to red, light beams having a wavelength band corresponding to green, and light beams having a wavelength band corresponding to blue, among the light beams to be emitted from the illumination device, to the R light valve, the G light valve, and the B light valve, respectively;
a color combiner for combining the light beams having the wavelength band corresponding to red, the light beams having the wavelength band corresponding to green, and the light beams having the wavelength band corresponding to blue, modulated by the R light valve, the G light valve, and the B light valve respectively, to generate the modulated image light beams;
light superimposing means for superimposing, on the modulated image light beams, light beams having a fourth wavelength band other than the wavelength bands corresponding to red, green, and blue, among the light beams to be emitted from the illumination device; and
a fourth light valve for modulating the light beams having the fourth wavelength band.

10. The projection video display device according to claim 8, wherein
the light modulation unit includes a light guiding optical system for separating the light beams to be emitted from the illumination device into color component beams to guide the separated color component beams to a corresponding light valve, and

the light guiding optical system has a light amount adjuster for acting on light beams having a second wavelength band different from a first wavelength band, among the color component beams, to adjust an incident light amount of the light beams having the second wavelength band with respect to the light valve, the light beams having the first wavelength band having a higher color purity in monochromatic color.

FIG.1

EP 1 983 763 A2

## FIG.2A

105

103

104

113

114

111

112

101

102

**TOP PLAN VIEW**

## FIG.2B

113

114

103

104

105

101

102

111

112

**FRONT VIEW**

EP 1 983 763 A2

EP 1 983 763 A2

**_FIG. 3A_**

113    114

111    112

**_FIG. 3B_**

113    114

111    112

**_FIG. 3C_**

113    114

113a    114a

111a    112a

111    112

**_FIG. 3D_**

113    114

113a    114a

111a    112a

111    112

EP 1 983 763 A2

**FIG. 4A**

113    114

111    112

ONE-LAMP LIGHT-ON
(MIDDLE-LAMP LIGHT-ON)

**FIG. 4B**

TWO-LAMP LIGHT-ON
(DIAGONAL-LAMP LIGHT-ON)

**FIG. 4C**

THREE-LAMP LIGHT-ON
( MIDDLE-LAMP LIGHT-ON &
DIAGONAL-LAMP LIGHT-ON )

**FIG. 4D**

FOUR-LAMP LIGHT-ON
(SURROUNDING-LAMP LIGHT-ON)

**FIG. 4E**

FIVE-LAMP LIGHT-ON
(ALL-LAMP LIGHT-ON)

FIG.5A

FIG.5B

TOP PLAN VIEW

TOP PLAN VIEW

EP 1 983 763 A2

# FIG.6A

Y
↑
●——→X
Z

145

103

104

113    114

111    112

101

102

**TOP PLAN VIEW**

# FIG.6B

Z
↑
●——→X
Y

113    114

103    104

145

101    102

111    112

**FRONT VIEW**

EP 1 983 763 A2

FIG. 7B

FRONT VIEW

FIG. 7A

TOP PLAN VIEW

**FIG.8B**

FRONT VIEW

114 · 115 · 113 · 112 · 111

**FIG.8A**

TOP PLAN VIEW

105 · 104 · 102 · 115 · 114 · 113 · 112 · 111 · 103 · 101

*FIG.9A*

Y
↑
●——→ X
Z

103                    104

113        114

111        112

115

101                    102

105

**TOP PLAN VIEW**

*FIG.9B*

Z
↑
●——→ X
Y

113                    114

115                    115a

111                    112

**FRONT VIEW**

EP 1 983 763 A2

## FIG.10A

105

116

103

101

TOP PLAN VIEW

## FIG.10B

116

103

101

105

116a

104

102

LEFT SIDE VIEW

EP 1 983 763 A2

## FIG.11A

103
101
105
116
117

Y
Z → X

**TOP PLAN VIEW**

## FIG.11B

Y
X → Z

116
104
103
105
102
101
117a
117

**LEFT SIDE VIEW**

EP 1 983 763 A2

FIG.12A

FIG.12B

TOP PLAN VIEW

TOP PLAN VIEW

EP 1 983 763 A2

33

FIG.13B

FRONT VIEW

FIG.13A

TOP PLAN VIEW

FIG.14A

FIG.14B

TOP PLAN VIEW

FRONT VIEW

EP 1 983 763 A2

**FIG.15A**

**FIG.15B**

TOP PLAN VIEW

FRONT VIEW

EP 1 983 763 A2

FIG.16B

FRONT VIEW

FIG.16A

TOP PLAN VIEW

*FIG.17B*

FRONT VIEW

*FIG.17A*

TOP PLAN VIEW

FIG.18

*FIG.19*

EP 1 983 763 A2

FIG.20

EP 1 983 763 A2

EP 1 983 763 A2

**FIG.21A**

**FIG.21B**

FIG.22

43

*FIG.23B*

*FIG.23A*

FIG.24.

EP 1 983 763 A2

FIG.25

WAVELENGTH (nm)

EP 1 983 763 A2

## FIG.26B

## FIG.26A

FIG.27

EP 1 983 763 A2

FIG.28

EP 1 983 763 A2

FIG.29

## FIG.30A

LAMP 3

MIRROR 3

MIRROR 4

LAMP 4

MIRROR 1

MIRROR 2

LAMP 1

LAMP 2

**TOP PLAN VIEW**

## FIG.30B

LAMP 3

MIRROR 3

MIRROR 4

LAMP 4

LAMP 1

MIRROR 1

MIRROR 2

LAMP 2

**FRONT VIEW**

## FIG.30C

LAMP 3

LAMP 4

LAMP 1

LAMP 2

**TOP PLAN VIEW**

## FIG.30D

LAMP 3

LAMP 4

LAMP 1

LAMP 2

**FRONT VIEW**

EP 1 983 763 A2

*FIG. 31B*

*FIG. 31A*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007110962 B
- JP 2007292217 B

- WO 2004088413 A